(19) **Europäisches Patentamt** / **European Patent Office** / **Office européen des brevets**

(11) **EP 3 006 935 B1**

(12) **FASCICULE DE BREVET EUROPEEN**

(45) Date de publication et mention
de la délivrance du brevet:
**08.03.2017 Bulletin 2017/10**

(51) Int Cl.:
*G01N 30/86* *(2006.01)* *G01N 30/64* *(2006.01)*

(21) Numéro de dépôt: **15185873.5**

(22) Date de dépôt: **18.09.2015**

(54) **PROCÉDÉ ET DISPOSITIF DE DÉTERMINATION D'UNE COMPOSITION D'UN ÉCHANTILLON GAZEUX TRAITÉ PAR CHROMATOGRAPHIE GAZEUSE**

VERFAHREN UND VORRICHTUNG ZUR BESTIMMUNG EINER ZUSAMMENSETZUNG IN EINER GASFÖRMIGEN PROBE, DIE MIT GASCHROMATOGRAPHIE BEHANDELT WURDE

METHOD AND DEVICE FOR DETERMINING A COMPOSITION OF A GASEOUS SAMPLE TREATED BY GAS CHROMATOGRAPHY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.09.2014 FR 1458893**

(43) Date de publication de la demande:
**13.04.2016 Bulletin 2016/15**

(73) Titulaire: **Commissariat à l'Énergie Atomique et aux Énergies Alternatives
75015 Paris (FR)**

(72) Inventeurs:
 • **BERTHOLON, François
 38700 La Tronche (FR)**
 • **GRANGEAT, Pierre
 38330 Saint Ismier (FR)**
 • **GERFAULT, Laurent
 38210 Tullins (FR)**

 • **HARANT, Olivier
 38120 Saint-Egrève (FR)**
 • **JUTTEN, Christian
 38580 La Ferrière (FR)**

(74) Mandataire: **Bonnet, Michel
 Cabinet Bonnet
 93, rue Réaumur - Boîte 10
 75002 Paris (FR)**

(56) Documents cités:
 **WO-A2-2011/021198 US-A- 4 941 101**

 • **FELINGER ET AL: "Molecular dynamic theories in chromatography", JOURNAL OF CHROMATOGRAPHY, ELSEVIER SCIENCE PUBLISHERS B.V, NL, vol. 1184, no. 1-2, 3 janvier 2008 (2008-01-03), pages 20-41, XP022503325, ISSN: 0021-9673, DOI: 10.1016/J.CHROMA.2007.12.066**

**Description**

La présente invention concerne un procédé de détermination d'une composition d'un échantillon gazeux traité par chromatographie gazeuse. Elle concerne également un dispositif mettant en oeuvre ce procédé.

L'invention s'applique plus particulièrement à un procédé comportant les étapes suivantes :

- faire passer l'échantillon par une chaîne de traitement comportant une colonne de chromatographie gazeuse et un détecteur de gaz disposé en sortie de la colonne de chromatographie gazeuse,
- obtenir, en sortie du détecteur de gaz, un signal électrique représentatif de la composition de l'échantillon,
- déterminer la composition de l'échantillon à l'aide d'un dispositif de traitement de ce signal électrique.

Un tel procédé est mis en oeuvre dans des dispositifs proposés par la société APIX Technology, comme cela est par exemple décrit dans la demande de brevet FR 2 996 219 A1. Selon ce procédé, en sortie de la colonne de chromatographie, une partie des molécules de différentes espèces gazeuses de l'échantillon est adsorbée sur un capteur à poutre vibrante d'un détecteur électromécanique de gaz provoquant ainsi une ou plusieurs chutes temporaires des fréquences fondamentale et harmoniques de résonance de cette poutre vibrante. L'étude de l'un des modes de résonance du détecteur électromécanique de gaz permet alors de détecter cette ou ces chutes temporaires de fréquences pour identifier voire quantifier individuellement les espèces gazeuses présentes dans l'échantillon.

Grâce à l'évolution rapide des technologies en termes de miniaturisation, il est aujourd'hui possible de développer des colonnes de chromatographie gazeuse à l'échelle micrométrique et des détecteurs de gaz à l'échelle nanométrique, ces derniers étant avantageusement conçus sur la base de capteurs NEMS (de l'Anglais « Nano Electro Mechanical Systems »), afin d'analyser des volumes d'échantillons de plus en plus petits et de disposer d'outils de mesure adaptables et transportables dans de nombreux d'environnements.

Des applications particulièrement prometteuses et à l'étude actuellement concernent par exemple de façon non exhaustive :

- la détection d'espèces gazeuses dangereuses dans l'air, dans les domaines de la prévention des risques nucléaires, radiologiques, biologiques et chimiques,
- la détection d'explosifs dans le domaine de la lutte anti-terrorisme,
- la détection de polluants toxiques dans l'eau tels que les hydrocarbures aromatiques polycycliques, une telle détection mettant généralement en oeuvre une étape pré-analytique en phase liquide et une étape analytique en phase gazeuse,
- la détermination du pouvoir calorifique d'un gaz naturel par détermination de sa composition précise en espèces gazeuses identifiées, ce pouvoir calorifique pouvant en effet être estimé de façon très simple en tant que combinaison linéaire des pouvoirs calorifiques connus des espèces gazeuses identifiées pondérés par leurs concentrations respectives dans un échantillon de gaz naturel.

Cette dernière application présente des enjeux non négligeables pour les industriels du domaine de l'énergie. En effet, le prix de vente du gaz naturel repose sur son pouvoir calorifique, exprimé en KWh. Il est donc particulièrement avantageux de pouvoir disposer d'outils de mesure implantables sur des conduits de transport de gaz ou chez des particuliers pour contrôler en temps réel le pouvoir calorifique d'un gaz naturel transporté ou fourni.

Mais le traitement de signal proposé, notamment dans le document FR 2 996 219 A1, reste généralement assez élémentaire et peu précis alors que les instants de chutes de fréquences, l'ampleur de ces chutes de fréquences ou la forme que prennent ces variations de fréquences dans le signal fourni par le détecteur de gaz constituent des informations pertinentes dans l'analyse de la composition de l'échantillon gazeux.

Les documents suivants sont également considérés comme pertinents vis à vis de l'objet de la présente invention: WO 2011/021198 A2 (SPECTROSENSE LTD, publié le 24 février 2011) divulgue un procédé de détermination d'une composition d'un échantillon gazeux traité par chromatographie gazeuse, comportant les étapes suivantes: i) faire passer l'échantillon par une chaîne de traitement comportant une colonne de chromatographie gazeuse et

un détecteur de gaz disposé en sortie de la colonne de chromatographie gazeuse ; ii) obtenir, en sortie du détecteur de gaz, un signal électrique représentatif de la composition de l'échantillon; iii) déterminer la composition de l'échantillon à l'aide d'un dispositif de traitement de ce signal électrique.

Le document "Molecular dynamic theories in chromatography", (FELINGER ET AL, JOURNAL OF CHROMATOGRAPHY, ELSEVIER SCIENCE PUBLISHERS B.V, NL, vol. 1184, no. 1-2, 3 janvier 2008, pages 20-41) propose une étude des phénomènes de dynamique moléculaire qui peuvent être utilisés pour modéliser une étape de séparation par chromatographie, et mentionne l'utilisation d'un modèle probabiliste pour la colonne.

US 4 941 101 A (CRILLY PAUL B, publié le 10 juillet 1990) divulgue l'utilisation d'un modèle de réponse impulsionnelle pour la partie détecteur d'un chromatographe en phase gazeuse. La transformation de Fourier est utilisée pour l'analyse des données mesurées.

Il peut ainsi être souhaité de prévoir un procédé de détermination d'une composition d'un échantillon gazeux traité par chromatographie gazeuse qui permette d'améliorer l'analyse du signal obtenu en sortie du détecteur de gaz.

Il est donc proposé un procédé du type défini précédemment dans lequel la détermination de la composition de l'échantillon se fait sur la base d'une combinaison stockée en mémoire :

- d'un modèle probabiliste direct de la colonne de chromatographie gazeuse, ce modèle comportant au moins une loi de probabilité définissant, pour au moins une espèce gazeuse susceptible de se trouver dans l'échantillon, une probabilité à chaque instant qu'une molécule de cette espèce gazeuse sorte de la colonne de chromatographie, et
- d'un modèle de réponse impulsionnelle du détecteur de gaz, et dans lequel l'étape de détermination est réalisée par inversion de cette combinaison de modèles à partir du signal électrique, l'inversion étant exécutée par le dispositif de traitement disposant de moyens d'accès à la mémoire.

Ainsi, en modélisant de façon probabiliste la chaîne de traitement, l'analyse directe du signal obtenu en sortie de cette chaîne peut être affinée de sorte que l'application d'une inversion permet ensuite de retrouver avec précision la composition *a priori* inconnue d'un échantillon passant par cette chaîne de traitement. Il convient en outre de noter que les paramètres des modèles mis en jeux dans ce procédé peuvent être définis simplement, par exemple soit par un apprentissage spécifique, soit par un modèle réaliste imposé par l'expérience, de sorte que la mise en oeuvre du procédé s'avère simple. Le modèle probabiliste direct de la colonne de chromatographie gazeuse peut en particulier être déterminé en fonction d'au moins un paramètre technique de cette colonne.

De façon optionnelle, le modèle probabiliste direct de la colonne de chromatographie gazeuse comporte une loi de probabilité définie pour chaque espèce gazeuse d'un ensemble de référence d'espèces gazeuses prédéterminées, cette loi de probabilité définissant une probabilité à chaque instant qu'une molécule de l'espèce gazeuse considérée sorte de la colonne de chromatographie. Les paramètres de cette loi peuvent notamment être exprimés en fonction des paramètres techniques suivants de la colonne de chromatographie :

- un facteur d'adsorption de l'espèce gazeuse considérée dans la colonne de chromatographie,
- un facteur de désorption de l'espèce gazeuse considérée dans la colonne de chromatographie,
- un temps mort correspondant au temps mis par un gaz porteur sans affinité avec sa paroi pour traverser cette colonne de chromatographie.

Les paramètres de cette loi peuvent également être déterminés expérimentalement, pour chacune desdites espèces gazeuses prédéterminées.

De façon optionnelle également, la loi de probabilité définie pour chaque espèce gazeuse dans le modèle probabiliste direct de la colonne de chromatographie gazeuse présente la forme suivante :

$$P_j(t, \theta_j) = \frac{\sqrt{4 \cdot k_{a,j} \cdot k_{d,j} \cdot t_0 \cdot t}}{2 \cdot t} \cdot I_1 \cdot \left( \sqrt{4 \cdot k_{a,j} \cdot k_{d,j} \cdot t_0 \cdot t} \right) \cdot e^{-k_{a,j} \cdot t_0 - k_{d,j} \cdot t},$$

où $t$ est le temps, $t \geq 0$, l'indice j identifie l'espèce gazeuse considérée, $k_{a,j}$ est le facteur d'adsorption de cette espèce gazeuse dans la colonne de chromatographie, $k_{d,j}$ est le facteur de désorption de cette espèce gazeuse dans la colonne de chromatographie, $\theta_j = (k_{a,j}, k_{d,j})$, $I_1$ est la fonction de Bessel modifiée de première espèce et de premier ordre et $t_0$ est le temps mort de la colonne de chromatographie.

De façon optionnelle également, le modèle de réponse impulsionnelle du détecteur de gaz comporte une loi de probabilité définie pour chaque espèce gazeuse d'un ensemble de référence d'espèces gazeuses prédéterminées, cette loi de probabilité définissant une réponse impulsionnelle probabiliste du détecteur électromécanique de gaz à une impulsion que constitue une molécule de l'espèce gazeuse considérée. Cette réponse impulsionnelle probabiliste du détecteur de gaz peut être obtenue de façon analytique, en établissant un modèle direct, mais elle peut également être obtenue de façon expérimentale.

De façon optionnelle également, lequel le détecteur de gaz est un détecteur électromécanique de gaz et les paramètres de chaque loi de probabilité dudit modèle de réponse impulsionnelle sont exprimés en fonction de paramètres techniques du détecteur de gaz incluant :

- un facteur d'adsorption de l'espèce gazeuse considérée dans le détecteur électromécanique de gaz,
- un facteur de désorption de l'espèce gazeuse considérée dans le détecteur électromécanique de gaz,
- un temps d'interaction correspondant au temps de présence d'une molécule en phase mobile au regard du détecteur électromécanique de gaz.

De façon optionnelle également, la loi de probabilité définie pour chaque espèce gazeuse dans le modèle de réponse impulsionnelle du détecteur électromécanique de gaz présente la forme suivante :

$$r_j(t) = mm_j \cdot \left(1 - e^{-k_{a,j}^{NEMS} \cdot T_e}\right) \cdot f_{heaviside}(t) \cdot e^{-k_{d,j}^{NEMS} \cdot t},$$

où $t$ est le temps, l'indice j identifie l'espèce gazeuse considérée, $mm_j$ est la masse moléculaire de cette espèce gazeuse, $k_{a,j}^{NEMS}$ est le facteur d'adsorption de cette espèce gazeuse dans le détecteur électromécanique de gaz, $k_{d,j}^{NEMS}$ est le facteur de désorption de cette espèce gazeuse dans le détecteur électromécanique de gaz, $f_{heaviside}$ est la fonction de Heaviside et $T_e$ est le temps d'intégration du détecteur électromécanique de gaz.

De façon optionnelle également, la combinaison des modèles stockée en mémoire est une combinaison linéaire de produits de convolution entre les lois de probabilité du modèle probabiliste direct de la colonne de chromatographie gazeuse et les lois de probabilité du modèle de réponse impulsionnelle du détecteur électromécanique de gaz, cette combinaison linéaire prenant la forme suivante :

$$g_k(t) = g_{0,k} - \alpha_k \sum_{j=1}^{N} C_j \cdot P_j(t, \theta_j) * r_j(t) + \varepsilon(t),$$

où $t$ est le temps, l'indice k identifie un mode fondamental ou harmonique de fréquence de résonance du détecteur électromécanique de gaz, $g_k(t)$ est une fréquence instantanée de résonance de mode k du détecteur électromécanique de gaz, cette fréquence instantanée formant le signal électrique obtenu à sa sortie, $g_{0,k}$ est une fréquence instantanée de résonance de mode k à vide du détecteur électromécanique de gaz, $\alpha_k$ est une constante de pondération pour le mode k, N est le nombre d'espèces gazeuses dans l'échantillon, l'indice j identifie une espèce gazeuse, $C_j$ est la concentration moléculaire de cette espèce gazeuse dans l'échantillon, $P_j(t, \theta_j)$ est la loi de probabilité du modèle probabiliste direct de la colonne de chromatographie gazeuse pour cette espèce gazeuse, $r_j(t)$ est la loi de probabilité du modèle de réponse impulsionnelle du détecteur de gaz pour cette espèce gazeuse et $\varepsilon(t)$ est un modèle probabiliste de bruit.

De façon optionnelle également, l'inversion de ladite combinaison de modèles comporte les étapes suivantes :

-   constitution d'une base de N vecteurs représentatifs de N espèces gazeuses connues de l'échantillon, chaque vecteur de cette base étant défini sous la forme $P_j(t, \theta_j) * r_j(t)$ où $P_j(t, \theta_j)$ est la loi de probabilité du modèle probabiliste direct de la colonne de chromatographie gazeuse pour la j-ième espèce gazeuse et $r_j(t)$ est le modèle de réponse impulsionnelle du détecteur de gaz pour la j-ième espèce gazeuse,
-   inversion de ladite combinaison de modèles à partir du signal électrique de façon à obtenir une valeur de proportion pour chaque espèce gazeuse de l'échantillon.

De façon optionnelle également, l'inversion de ladite combinaison de modèles comporte les étapes suivantes :

-   constitution d'une base de N vecteurs représentatifs de N espèces gazeuses connues de l'échantillon, chaque vecteur de cette base étant défini sous la forme $P_j(t, \theta_j) * r_j(t)$ où $P_j(t, \theta_j)$ est la loi de probabilité du modèle probabiliste direct de la colonne de chromatographie gazeuse pour la j-ième espèce gazeuse et $r_j(t)$ est le modèle de réponse impulsionnelle du détecteur de gaz pour la j-ième espèce gazeuse,
-   constitution d'un dictionnaire de N' noyaux vectoriels représentatifs, avec N' ≥ N, chaque espèce gazeuse étant associée à un ou plusieurs noyaux vectoriels, chaque noyau vectoriel étant obtenu :

•   soit à partir des vecteurs $(P_j(t, \theta_j) * r_j(t))_{1 \leq j \leq N}$ en modulant la valeur de certains paramètres techniques, par exemple choisis parmi $k_{a,j}$,

$$k_{d,j}, \ k_{a,j}^{NEMS}, \ k_{d,j}^{NEMS}, \ t_0, T_e,$$

•   soit à partir d'un modèle arbitraire de bruit, décrivant notamment une ligne de base du signal électrique,

- inversion de ladite combinaison de modèles ($P_j$, $r_j$) à partir du signal électrique ($g_k(t)$) de façon à obtenir une valeur de proportion pour chaque espèce gazeuse de l'échantillon.

De façon optionnelle également, l'inversion de ladite combinaison de modèles comporte les étapes suivantes :

- constitution d'une base de P vecteurs représentatifs de P matériaux gazeux connus ou prédéterminés de l'échantillon, chaque vecteur de cette base étant défini sous la forme $E_i(t) = \sum_{j=1}^{N} p_{i,j} \cdot P_j(t, \theta_j) * r_j(t)$ où $P_j(t, \theta_j)$ est la loi de probabilité du modèle probabiliste direct de la colonne de chromatographie gazeuse pour la j-ième espèce gazeuse, $r_j(t)$ est le modèle de réponse impulsionnelle du détecteur de gaz pour la j-ième espèce gazeuse et $p_{i,j}$ exprime la probabilité qu'une molécule du i-ième matériau gazeux soit de la j-ième espèce gazeuse,
- inversion de ladite combinaison de modèles ($P_j$, $r_j$) à partir du signal électrique ($g_k(t)$) de façon à obtenir une valeur de proportion pour chaque matériau gazeux de l'échantillon.

De façon optionnelle également, l'inversion de ladite combinaison de modèles comporte les étapes suivantes :

- constitution d'une base de P vecteurs représentatifs de P matériaux gazeux connus ou prédéterminés de l'échantillon, chaque vecteur de cette base étant défini sous la forme $E_i(t) = \sum_{j=1}^{N} p_{i,j} \cdot P_j(t, \theta_j) * r_j(t)$ où $P_j(t, \theta_j)$ est la loi de probabilité du modèle probabiliste direct de la colonne de chromatographie gazeuse pour la j-ième espèce gazeuse, $r_j(t)$ est le modèle de réponse impulsionnelle du détecteur de gaz pour la j-ième espèce gazeuse et $p_{i,j}$ exprime la probabilité qu'une molécule du i-ième matériau gazeux soit de la j-ième espèce gazeuse,
- constitution d'un dictionnaire de P' noyaux vectoriels représentatifs, avec P' ≥ P, chaque matériau gazeux étant associé à un ou plusieurs noyaux vectoriels, chaque noyau vectoriel étant obtenu :

  • soit à partir des vecteurs $(E_i(t))_{1 \leq i \leq P}$ en modulant la valeur de certains paramètres techniques, par exemple choisis parmi $k_{a,j}$,

$$k_{d,j}, k_{a,j}^{NEMS}, k_{d,j}^{NEMS}, t_0, T_e,$$

  • soit à partir d'un modèle arbitraire de bruit, décrivant notamment une ligne de base du signal électrique,

- inversion de ladite combinaison de modèles ($P_j$, $r_j$) à partir du signal électrique ($g_k(t)$) de façon à obtenir une valeur de proportion pour chaque matériau gazeux de l'échantillon.

De façon optionnelle également, l'étape de détermination par inversion met en oeuvre un estimateur bayésien.

De façon optionnelle également, le signal électrique obtenu en sortie du détecteur de gaz est préalablement débruité avant exécution de l'étape de détermination, ce débruitage incluant la suppression d'une ligne de base et étant réalisé par une décomposition en ondelettes du signal électrique et une sélection d'une partie seulement des composantes d'ondelettes obtenues.

Il est également proposé un dispositif de détermination d'une composition d'un échantillon gazeux traité par chromatographie gazeuse, comportant :

- une chaîne de traitement de l'échantillon comportant une colonne de chromatographie gazeuse et un détecteur de gaz disposé en sortie de la colonne de chromatographie gazeuse, conçue pour la fourniture d'un signal représentatif de la composition de l'échantillon, et
- un dispositif de traitement de signal conçu matériellement ou programmé pour appliquer, en combinaison avec la chaîne de traitement, un procédé de détermination de la composition de l'échantillon gazeux selon l'invention.

De façon optionnelle, le détecteur de gaz est un détecteur électromécanique NEMS.

L'invention sera mieux comprise à l'aide de la description qui va suivre, donnée uniquement à titre d'exemple et faite en se référant aux dessins annexés dans lesquels :

- la figure 1 représente schématiquement la structure générale d'un dispositif de détermination d'une composition en espèces gazeuses d'un échantillon traité par chromatographie gazeuse selon un mode de réalisation de l'invention,
- la figure 2 illustre une modélisation probabiliste directe d'une chaîne de traitement du dispositif de la figure 1, selon un mode de réalisation de l'invention,

- la figure 3 est un diagramme temporel illustrant un exemple de signal de sortie d'un détecteur de gaz du dispositif de la figure 1, et
- la figure 4 illustre les étapes successives d'un procédé de détermination d'une composition en espèces gazeuses d'un échantillon traité par chromatographie gazeuse mis en oeuvre par le dispositif de la figure 1.

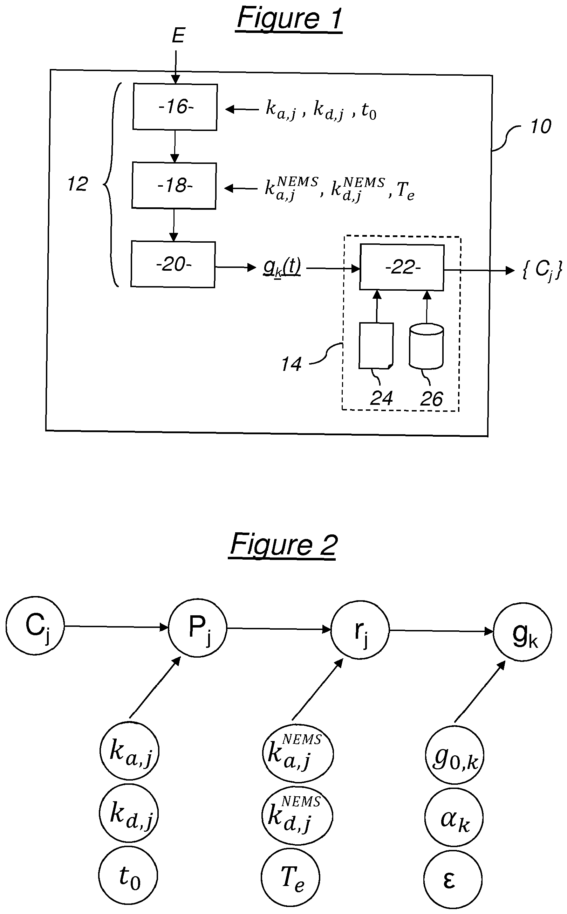

Le dispositif 10 de détermination d'une composition en espèces gazeuses d'un échantillon E traité par chromatographie gazeuse, représenté schématiquement sur la figure 1, comporte une chaîne 12 de traitement de l'échantillon E conçue pour la fourniture d'un signal $g_k(t)$ représentatif de cette composition en fonction de paramètres techniques de la chaîne de traitement 12. Il comporte en outre un dispositif 14 de traitement de signal conçu pour appliquer, en combinaison avec la chaîne de traitement 12, un procédé d'estimation de cette composition en fonction des paramètres techniques de la chaîne de traitement 12.

Dans l'exemple qui va être détaillé par la suite mais qui ne doit pas être considéré comme limitatif, la composition à estimer est un ensemble de valeurs de proportions {$C_1$, ..., $C_j$, ..., $C_N$} de N espèces gazeuses {$G_1$, ..., $G_j$, ..., $G_N$} dans l'échantillon E. Dans un autre exemple simplifié, la composition estimée pourrait être simplement qualitative, sans être quantitative. Il s'agirait alors uniquement d'identifier une ou plusieurs espèces gazeuses présentes dans l'échantillon E, sans avoir besoin d'estimer précisément leurs proportions ou concentrations respectives.

Dans la chaîne de traitement 12, l'échantillon E est tout d'abord injecté en phase gazeuse dans une colonne de chromatographie gazeuse 16 dans laquelle circule un gaz porteur.

La colonne de chromatographie 16 comporte une paroi adsorbante avec laquelle le gaz porteur n'a pas d'affinité, c'est-à-dire que ses molécules ne sont pas adsorbées. En revanche, les molécules des différentes espèces gazeuses de l'échantillon injecté peuvent être plus ou moins adsorbées par cette paroi selon leur nature. Ceci a pour conséquence de plus ou moins ralentir la progression de certaines espèces gazeuses dans la colonne. Le temps de parcours de l'échantillon E, et plus précisément des différentes espèces gazeuses qui le constituent, est appelé temps de rétention et est caractéristique de la nature du gaz.

Le gaz porteur n'ayant pas d'affinité avec la paroi de la colonne de chromatographie 16, il n'est pas ralenti dans sa progression. Sa vitesse de déplacement est supposée constante. Son temps de parcours, minimal dans la colonne de chromatographie, est appelé « temps mort » et constitue un premier paramètre technique $t_0$ de la colonne de chromatographie 16.

Au contraire du gaz porteur, chaque espèce gazeuse de l'échantillon a une certaine affinité avec la paroi de la colonne de chromatographie 16. Cette affinité peut être définie à l'aide de deux paramètres techniques propres à chaque espèce gazeuse $G_j$, le premier paramètre étant le facteur d'adsorption $k_{a,j}$ et le deuxième, le facteur de désorption $k_{d,j}$. Le facteur d'adsorption $k_{a,j}$ représente la probabilité par unité de temps qu'une molécule de l'espèce gazeuse $G_j$, en phase mobile dans la colonne de chromatographie 16, entre en phase stationnaire par adsorption. Son inverse représente donc le temps moyen qu'une molécule de l'espèce gazeuse considérée reste en phase mobile. Le facteur de désorption $k_{d,j}$ représente la probabilité par unité de temps qu'une molécule de l'espèce gazeuse $G_j$, en phase stationnaire dans la colonne de chromatographie 16, soit désorbée. Son inverse représente donc le temps moyen qu'une molécule de l'espèce gazeuse considérée reste en phase stationnaire. Il en résulte que la somme $(k_{a,j})^{-1} + (k_{d,j})^{-1}$ représente le temps de rétention de l'espèce gazeuse $G_j$, dans la colonne de chromatographie 16.

Il peut ainsi être établi un modèle probabiliste direct de la colonne de chromatographie gazeuse en fonction d'au moins l'un de ses paramètres techniques, notamment en fonction des paramètres $t_0$, $k_{a,j}$ et $k_{d,j}$. Ce modèle probabiliste peut se décliner en une loi de probabilité pour chaque espèce gazeuse, définissant une probabilité à chaque instant $t$ notée $P_j(t, \theta_j)$, avec $\theta_j = (k_{a,j}, k_{d,j})$, qu'une molécule de l'espèce gazeuse $G_j$ sorte de la colonne de chromatographie 16. Un exemple non limitatif d'un tel modèle probabiliste direct est donné dans l'article de Felinger, intitulé « Molecular dynamic theories in chromatography », Journal of Chromatography A, vol. 1184, pages 20-41, janvier 2008. Chaque loi de probabilité définie pour chaque espèce gazeuse $G_j$ dans ce modèle probabiliste présente la forme suivante :

$$P_j(t, \theta_j) = \frac{\sqrt{4 \cdot k_{a,j} \cdot k_{d,j} \cdot t_0 \cdot t}}{2 \cdot t} \cdot I_1 \cdot \left( \sqrt{4 \cdot k_{a,j} \cdot k_{d,j} \cdot t_0 \cdot t} \right) \cdot e^{-k_{a,j} \cdot t_0 - k_{d,j} \cdot t},$$

pour tout $t \geq 0$, où $I_1$ est la fonction de Bessel modifiée de première espèce et de premier ordre. Bien sûr, pour tout $t \leq 0$, $P_j(t, \theta_j) = 0$.

Ainsi, le modèle probabiliste direct de la colonne de chromatographie gazeuse peut être établi à partir d'au moins un paramètre technique de la colonne. Alternativement, ce modèle probabiliste direct peut être déterminé de façon expérimentale, pour chaque espèce gazeuse considérée.

En sortie de la colonne de chromatographie 16, les molécules d'espèces gazeuses de l'échantillon E rencontrent un détecteur de gaz 18 de la chaîne de traitement 12. Dans l'exemple que constitue le mode de réalisation étudié, le détecteur de gaz 18 est électromécanique. Avantageusement, pour des raisons de compacité et de transportabilité, il s'agit d'un détecteur NEMS. Mais il pourrait s'agir plus généralement de tout détecteur de gaz dont la réponse impulsionnelle est modélisable de façon probabiliste, comme par exemple un détecteur TCD (de l'Anglais « Thermo Conductive Device ») dont la réponse impulsionnelle peut comporter une composante de gain et une composante de réponse impulsionnelle de l'électronique d'acquisition, ou un détecteur FID (de l'Anglais « Flame Ionization Detector ») dont la réponse impulsionnelle peut comporter également une composante de gain et une composante de réponse impulsionnelle de l'électronique d'acquisition.

D'une façon générale, la réponse impulsionnelle du détecteur de gaz 18 peut être déterminée selon une modélisation de la réponse du détecteur pour chaque espèce gazeuse considérée, cette modélisation étant notamment réalisée sur la base de paramètres techniques du détecteur. Elle peut être également obtenue de façon expérimentale, pour chaque espèce gazeuse considérée.

Le détecteur NEMS 18 est un capteur gravimétrique composé d'une poutre nanométrique fonctionnalisée et d'un système qui la met en vibration à une certaine fréquence de résonance grâce à des actionneurs. Des jauges mesurent l'amplitude des déplacements de la poutre par effet piézoélectrique. Un tel détecteur NEMS repose sur la propriété physique suivante : lorsqu'une molécule est adsorbée par la poutre nanométrique, la fréquence de résonance de celle-ci chute proportionnellement à la masse ajoutée par la molécule. En effet, on peut considérer que la poutre est soumise à une force linéique dont l'effet ne dépend spatialement que de la position le long de la poutre. Si cette force est oscillatoire et que l'on écrit l'équation différentielle résultante dans le domaine de Laplace, il apparaît que la poutre se comporte comme un système résonant amorti de fréquence de résonance $g = \sqrt{\frac{K}{M}}$, où K est la constante de raideur de la poutre et M la masse effective de la poutre en vibration.

Par conséquent, en ajoutant par adsorption une molécule de masse dm à la poutre on obtient la fréquence de résonance :

$$g' = \sqrt{\frac{K}{M + dm}} = \sqrt{\frac{K}{M(1 + \frac{dm}{M})}},$$

soit, en faisant un développement limité au premier ordre (dm << M) :

$$g' - g = -\frac{g}{2M} dm$$

La chute de fréquence est donc bien proportionnelle à la masse adsorbée et l'on peut, en généralisant à l'un quelconque des modes fondamental ou harmoniques de résonance, écrire la fréquence instantanée de résonance de mode k du détecteur électromécanique de gaz 18 sous la forme suivante :

$$g_k(t) = g_{0,k} - \alpha'_k \cdot m(t) + \varepsilon(t),$$

où $g_{0,k}$ est la fréquence instantannée de résonance de mode k à vide du détecteur électromécanique de gaz, $\alpha'_k$ est une constante de pondération pour le mode k, *m(t)* est la masse adsorbée à l'instant *t* et $\varepsilon(t)$ est un modèle probabiliste de bruit.

Cette fréquence instantanée peut être mesurée en maintenant le détecteur électromécanique de gaz 18 en résonance à l'aide d'un circuit d'auto-oscillation à boucle fermée. Il en résulte toutefois un temps d'interaction correspondant au temps de présence d'une molécule en phase mobile au regard du détecteur. Autrement dit, ce temps détermine une durée durant laquelle une molécule gazeuse est susceptible d'être adsorbée par la poutre fonctionnalisée du détecteur. Ce temps d'interaction constitue un premier paramètre technique $T_e$ du détecteur électromécanique de gaz 18.

Par ailleurs, le détecteur électromécanique de gaz 18 présente des propriétés d'adsorption et de désorption similaires à celles de la colonne de chromatographie 16, chaque espèce gazeuse de l'échantillon E ayant une certaine affinité avec la poutre nanométrique fonctionnalisée, bien que la fonctionnalisation de la poutre ne soit pas nécessairement la même que celle de la colonne de chromatographie. Cette affinité peut être définie à l'aide de deux paramètres techniques propres à chaque espèce gazeuse G$_j$, le premier paramètre étant le facteur d'adsorption $k_{a,j}^{NEMS}$ et le deuxième, le facteur de désorption $k_{d,j}^{NEMS}$. Ces deux paramètres techniques du détecteur électromécanique de gaz 18 ont la même signification que ceux de la colonne de chromatographie 16. Les valeurs de ces deux paramètres dépendent de la nature du revêtement, qui fonctionnalise la poutre du détecteur électromécanique de gaz 18, avec lequel les molécules gazeuses sont susceptibles d'être adsorbées et désorbées. Elles peuvent notamment prendre des valeurs différentes si la couche de revêtement qui fonctionnalise le détecteur électromécanique de gaz 18 est différente de la couche de revêtement qui fonctionnalise la colonne de chromatographie 16.

Une analyse probabiliste permettant d'expliciter la masse *m(t)* adsorbée à chaque instant *t* par le détecteur électromécanique de gaz 18 en fonction d'au moins l'un de ses paramètres techniques, notamment en fonction des paramètres $T_e$, $k_{a,j}^{NEMS}$ et $k_{d,j}^{NEMS}$ peut être effectuée. Selon cette analyse, en supposant qu'une adsorption de molécule se fait instantanément en sortie de la colonne de chromatographie 16, la probabilité qu'une molécule de l'espèce gazeuse $G_j$ soit adsorbée par le détecteur électromécanique de gaz 18 à l'instant *t* s'exprime de la façon suivante :

$$P_j^{NEMS}(t, \theta_j) = p_j \cdot P_j(t, \theta_j),$$

où $p_j$ est la probabilité qu'une molécule de l'espèce gazeuse $G_j$ soit adsorbée par le détecteur électromécanique de gaz 18 sachant qu'elle est sortie de la colonne de chromatographie 16, indépendamment de cet instant de sortie.

Compte tenu de l'enseignement de l'article de Felinger précité et du fait que l'adsorption dans le détecteur électromécanique de gaz 18 se fait de la même façon que dans la colonne de chromatographie 16, la probabilité $p_j$ peut être explicitée de la façon suivante :

$$p_j = \int_{\tau=0}^{T_e} f_{m,j}(\tau)d\tau = 1 - e^{-k_{a,j}^{NEMS} \cdot T_e},$$

où $f_{m,j}$ est la densité de probabilité, pour une molécule de l'espèce gazeuse $G_j$ en phase mobile, relative au temps d'attente $\tau$ avant adsorption. Cette durée $\tau$ suit une loi exponentielle du fait du processus poissonnien d'adsorption-désorption, de sorte que: $f_{m,j}(\tau) = k_{a,j}^{NEMS} \cdot e^{-k_{a,j}^{NEMS} \cdot \tau}$.

Par ailleurs, la probabilité qu'une molécule de l'espèce gazeuse $G_j$, qui a été adsorbée à un instant u, reste adsorbée par le détecteur électromécanique de gaz 18 au moins jusqu'à un instant *t* s'exprime de la façon suivante :

$$\int_{\tau=t-u}^{\infty} f_{s,j}(\tau)d\tau = \int_{\tau=t-u}^{\infty} k_{d,j}^{NEMS} \cdot e^{-k_{d,j}^{NEMS} \cdot \tau}d\tau = e^{-k_{d,j}^{NEMS} \cdot (t-u)},$$

où $f_{s,j}$ est la densité de probabilité, pour une molécule de l'espèce gazeuse $G_j$ en phase stationnaire, relative au temps d'attente $\tau$ avant désorption qui suit également une loi exponentielle du fait du processus poissonnien d'adsorption-désorption.

De ce qui précède, nous déduisons la proportion de molécules Gj adsorbées à l'instant *t* :

$$n_j(t) = \int_{u=0}^{t} \left[P_j^{NEMS}(u, \theta_j)\right] \cdot \left[\int_{\tau=t-u}^{\infty} f_{s,j}(\tau)d\tau\right] du,$$

d'où :

$$n_j(t) = \int_{u=0}^{t} P_j^{NEMS}(u, \theta_j) \cdot e^{-k_{d,j}^{NEMS} \cdot (t-u)} du = P_j^{NEMS}(t, \theta_j) * \left[f_{heaviside}(t) \cdot e^{-k_{d,j}^{NEMS} t}\right]$$

Sachant que la masse totale présente à l'instant *t* sur la poutre peut s'écrire :

$$m(t) = N_T \sum_{j=1}^{N} mm_j \cdot C_j \cdot n_j(t),$$

on obtient une expression complète pour *m(t)* :

$$m(t) = N_T \sum_{j=1}^{N} mm_j \cdot C_j \cdot P_j^{NEMS}(t, \theta_j) * \left[ f_{heaviside}(t) \cdot e^{-k_{d,j}^{NEMS} \cdot t} \right],$$

c'est-à-dire :

$$m(t) = N_T \sum_{j=1}^{N} mm_j \cdot C_j \cdot \left( 1 - e^{-k_{a,j}^{NEMS} \cdot T_e} \right) \cdot P_j(t, \theta_j) * \left[ f_{heaviside}(t) \cdot e^{-k_{d,j}^{NEMS} \cdot t} \right]$$

Dans cette expression, la formule :

$$r_j(t) = mm_j \cdot \left( 1 - e^{-k_{a,j}^{NEMS} \cdot T_e} \right) \cdot f_{heaviside}(t) \cdot e^{-k_{d,j}^{NEMS} \cdot t}$$

est assimilable à la réponse impulsionnelle mécanique du détecteur électromécanique de gaz 18.

Il peut ainsi être établi un modèle probabiliste direct du détecteur électromécanique de gaz 18, notamment mécanique, en fonction d'au moins l'un de ses paramètres techniques, notamment en fonction des paramètres $T_e$, $k_{a,j}^{NEMS}$ et $k_{d,j}^{NEMS}$. Ce modèle probabiliste peut se décliner en une loi de probabilité $r_j(t)$ pour chaque espèce gazeuse, définissant la réponse impulsionnelle probabiliste du détecteur électromécanique de gaz à une impulsion que constitue une molécule de l'espèce gazeuse considérée.

En variante, la réponse impulsionnelle du détecteur électromécanique de gaz 18 pourrait inclure une composante de réponse impulsionnelle électronique, indépendante des espèces gazeuses $G_j$, qui prendrait par exemple la forme $U(t) = e^{-t/\tau}$.

En notant $\alpha_k = \alpha'_k \cdot N_T$, la fréquence instantanée de résonance de mode k du détecteur électromécanique de gaz s'écrit :

$$g_k(t) = g_{0,k} - \alpha_k \sum_{j=1}^{N} C_j \cdot P_j(t, \theta_j) * r_j(t) + \varepsilon(t)$$

Cette fréquence instantanée de résonance obtenue en sortie de la chaîne de traitement 12 résulte donc d'une combinaison linéaire de produits de convolution entre les lois de probabilité du modèle probabiliste direct de la colonne de chromatographie gazeuse 16 et les lois de probabilité du modèle probabiliste direct du détecteur électromécanique de gaz 18.

Enfin, la chaîne de traitement 12 comporte un système 20 de lecture électronique des valeurs de fréquences instantanées de résonance du détecteur électromécanique de gaz 18 pour la fourniture du signal électrique $g_k(t)$ qui est alors représentatif de la composition en espèces gazeuses de l'échantillon E.

On notera que pour déterminer les paramètres techniques précités et autres constantes de la chaîne de traitement 12, celle-ci peut être calibrée ou étudiée statistiquement à l'aide d'échantillons connus de chacune des espèces gazeuses $G_j$.

Le signal électrique $g_k(t)$ est fourni en entrée du dispositif de traitement 14. Plus précisément, le dispositif de traitement 14 comporte un processeur 22 relié à des moyens de stockage comportant notamment au moins une séquence programmée d'instructions 24 et une base de données de modélisation 26.

La base de données 26 comporte les paramètres techniques et statistiques de la modélisation probabiliste directe du signal électrique $g_k(t)$ détaillée précédemment.

Sur fourniture du signal électrique effectivement observé $g_k(t)$, la séquence programmée d'instructions 24 est conçue pour résoudre l'inversion de ce modèle probabiliste.

La séquence d'instructions 24 et la base de données 26 sont fonctionnellement présentées comme distinctes sur la figure 1, mais en pratique elles peuvent être réparties différemment en fichiers de données, codes sources ou librairies informatiques sans que cela ne change quoi que ce soit aux fonctions remplies.

Comme illustré sur la figure 2, les signaux d'entrée et de sortie de la chaîne de traitement 12, les paramètres techniques et les modèles probabilistes définis précédemment ont une relation de dépendance entre eux, conduisant à un modèle probabiliste global hiérarchisé.

Ainsi, l'ensemble des lois de probabilité $P_j$ relatif à la colonne de chromatographie 16 est défini comme dépendant du temps mort $t_0$ et des paramètres d'adsorption/désorption $k_{a,j}, k_{d,j}$. L'application de ce modèle probabiliste direct est en outre fonction des proportions $C_j$ des différentes espèces gazeuses constituant l'échantillon E.

Ainsi également, l'ensemble des lois de probabilité $r_j$ relatif au détecteur électromécanique 18 est défini comme dépendant du temps d'intégration $T_e$ et des paramètres d'adsorption/désorption $k_{a,j}^{NEMS}, k_{d,j}^{NEMS}$. L'application de ce modèle probabiliste direct est en outre fonction de la sortie de la colonne de chromatographie 16.

Enfin, le signal électrique $g_k(t)$ obtenu en sortie du détecteur électromécanique de gaz 18 est défini comme dépendant des constantes $g_{0,k}$ et $\alpha_k$ ainsi que du modèle probabiliste de bruit $\varepsilon(t)$.

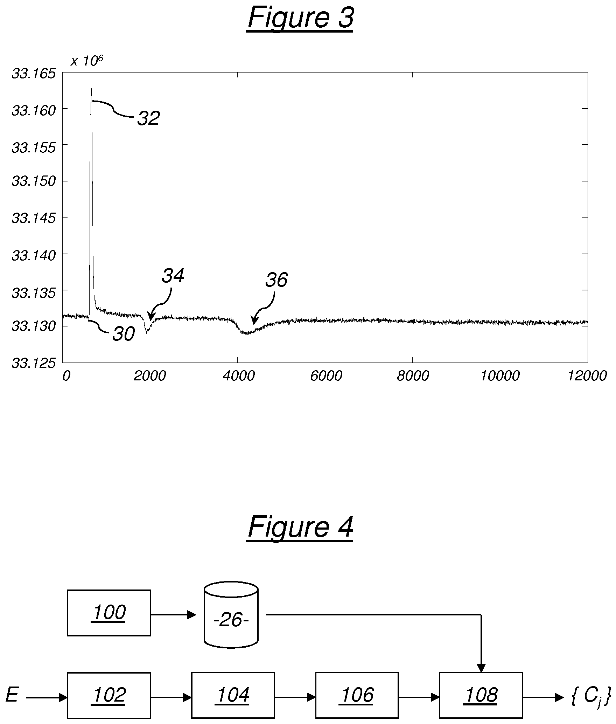

La figure 3 illustre un exemple de signal électrique $g_k(t)$ obtenu en sortie de la chaîne de traitement 12. Son amplitude repérée par l'axe des ordonnées indique la fréquence de résonance instantanée du détecteur électromécanique de gaz 18 et est exprimée en MHz. Cet exemple est obtenu avec un échantillon E comportant un mélange gazeux de xylène, de toluène et d'un gaz porteur constitué d'hélium.

A un premier instant identifié par la référence 30, le début d'un premier pic de fréquence indique l'instant d'injection de l'échantillon E dans la colonne de chromatographie 16.

A un deuxième instant identifié par la référence 32, le sommet de ce premier pic de fréquence indique, en référence au premier instant, l'arrivée du gaz porteur en fin de colonne de chromatographie 12, c'est-à-dire le temps mort $t_0$.

A un troisième instant identifié par la référence 34, une première chute de la fréquence de résonance indique la présence de toluène dans l'échantillon E. C'est autour de cet instant que les molécules de toluène sont adsorbées puis rapidement désorbées dans le détecteur électromécanique de gaz 18.

Enfin, à un quatrième instant identifié par la référence 36, une deuxième chute de fréquence de résonance indique la présence de xylène dans l'échantillon E. C'est autour de cet instant que les molécules de xylène sont adsorbées puis rapidement désorbées dans le détecteur électromécanique de gaz 18.

On notera par ailleurs que, selon la vitesse de propagation que l'on impose aux molécules de l'échantillon E, il peut y avoir un déséquilibre entre adsorption et désorption, à la fois dans la colonne de chromatographie 16 et dans le détecteur électromécanique de gaz 18. C'est le cas lorsque, au cours de la mesure, davantage de molécules sont adsorbées que désorbées. Il arrive aussi que la poutre oscillante du détecteur électromécanique de gaz 18 et la paroi de la colonne chromatographique 16 contiennent des molécules d'une mesure précédente qui ne se sont pas encore désorbées. Sur le signal électrique $g_k(t)$, cela a pour conséquence d'engendrer une ligne de base décroissante, comme cela est légèrement visible sur la figure 3. On peut considérer que la modélisation de cette ligne de base est incluse dans le modèle de bruit $\varepsilon(t)$. Avantageusement, on peut limiter cette ligne de base en effectuant une pré-acquisition avec l'échantillon E étudié, afin de nettoyer la chaîne de traitement 12 avant l'acquisition principale. Avantageusement également, on peut tenter de supprimer ou réduire cette ligne de base avec le bruit par un traitement approprié du signal électrique $g_k(t)$.

Sur la base du modèle probabiliste détaillé précédemment et illustré sur la figure 2, un procédé de détermination d'une composition en espèces gazeuses d'un échantillon E traité par chromatographie gazeuse, mis en oeuvre par le processeur 22 par exécution de la séquence d'instructions 24 va maintenant être décrit.

Conformément à une première application, par exemple de détermination précise de la composition d'un mélange gazeux en vue d'une estimation de son pouvoir calorifique, on suppose que le nombre N et l'identité des espèces gazeuses dans l'échantillon E sont connus.

Dans ce cas, au cours d'une première phase de calibrage et d'initialisation 100, les paramètres techniques $k_{a,j}$, $k_{d,j}$, $t_0$, $k_{a,j}^{NEMS}$, $k_{d,j}^{NEMS}$ et $T_e$ sont déterminés, notamment à l'aide d'échantillons de référence pour chacune des espèces gazeuses connues du mélange gazeux étudié. Ils dépendent également d'autres grandeurs telles que la température ou la pression d'entrée de la colonne de chromatographie 16. Au cours de cette même phase, une base de N vecteurs représentatifs des N espèces gazeuses connues de l'échantillon E est constituée. Chaque vecteur de cette base est défini sous la forme $P_j(t, \theta_j) * r_j(t)$. Les paramètres techniques et les vecteurs précités sont enregistrés dans la base de données 26.

Au cours d'une étape de mesure 102, conformément au montage de la figure 1, l'échantillon E traverse toute la chaîne de traitement 12 du dispositif 10.

Au cours d'une étape de lecture 104 suivante, le signal électrique $g_k(t)$ est fourni par le système de lecture 20.

Ensuite, au cours d'une étape optionnelle de filtrage 106, un premier traitement visant à éliminer le bruit $\varepsilon(t)$, incluant la ligne de base mentionnée précédemment, est effectué.

Il existe de nombreuses méthodes connues pour réaliser un tel filtrage. Notamment, une méthode est enseignée dans la thèse de doctorat de V. Mazet, intitulée « Développement de méthodes de traitement de signaux spectroscopiques : estimation de la ligne de base et du spectre de raies », soutenue à l'université Henry Poincaré de Nancy (FR), en 2005.

Une méthode originale est en outre présentée ci-dessous. Conformément à cette méthode, le signal $g_k(t)$ est décomposé de façon connue en soi dans une base d'ondelettes adaptée. Une base adaptée $(e_j)_{1 \leq j \leq N}$ signifie que la projection du signal dans cette base permet de bien séparer les composantes d'ondelettes, entre celles qui représentent le signal utile :

$$g_k(t) = g_{0,k} - \alpha_k \sum_{j=1}^{N} C_j \cdot P_j(t, \theta_j) * r_j(t),$$

et celles qui représentent le bruit $\varepsilon(t)$ incluant la ligne de base.

En d'autres termes, une base $(e_j)_{1 \leq j \leq N}$ est adaptée si :

$$g_k(t) = \sum_{j=1}^{N} a_j \, e_j \ , \ \text{avec} \ |a_1| > |a_2| > \cdots > |a_N|,$$

et s'il est possible de filtrer le signal $g_k(t)$ en sélectionnant seulement n composantes, avec n<N, représentatives du signal utile.

Il est à la portée de l'homme du métier de sélectionner une base d'ondelettes suffisamment parcimonieuse pour que le signal utile soit représenté sur un nombre restreint d'ondelettes et suffisamment sélective pour que le résidu correspondant à la décomposition de la ligne de base et du bruit sur les ondelettes sélectionnées puisse être négligé devant la décomposition du signal, et pour que la décomposition du signal sur les ondelettes non sélectionnées soit négligeable devant la décomposition du signal sur les ondelettes sélectionnées.

Enfin, au cours d'une dernière étape d'inversion 108, le signal électrique $g_k(t)$ débruité est par exemple projeté dans la base $(P_j(t, \theta_j) * r_j(t))_{1 \leq j \leq N}$, ce qui constitue l'inversion du modèle probabiliste direct établi précédemment. En effet, compte tenu de l'expression obtenue pour le signal $g_k(t)$ dans sa modélisation directe, une telle projection permet de retrouver les valeurs de proportions $\{C_1, ..., C_j, ..., C_N\}$ des N espèces gazeuses $\{G_1, ..., G_j, ..., G_N\}$ identifiées dans l'échantillon E. Cette projection est réalisée par minimisation de l'écart quadratique entre le signal électrique $g_k(t)$ débruité et l'espace vectoriel engendré par la base $(P_j(t, \theta_j) * r_j(t))_{1 \leq j \leq N}$. En variante, la projection peut être réalisée sur une base obtenue par ortho-normalisation de la base $(P_j(t, \theta_j) * r_j(t))_{1 \leq j \leq N}$, par exemple selon une décomposition QR ou par procédé de Gram-Schmidt. Dans ce cas, pour retrouver les valeurs de proportions $\{C_1, ..., C_j, ..., C_N\}$, il est nécessaire d'appliquer aux coefficients de projection la matrice de passage de la base $(P_j(t, \theta_j) * r_j(t))_{1 \leq j \leq N}$ à la base orthonormée obtenue.

D'une façon plus générale, la détermination des grandeurs recherchées, en l'occurrence celle des valeurs de proportions $C_j$ de chaque espèce gazeuse dans le mélange, est obtenue par une méthode d'inversion du signal électrique $(g_k(t))$ dans la base constituée par les vecteurs de base $(P_j(t, \theta_j) * r_j(t))_{1 \leq j \leq N}$.

Ainsi, selon une variante, l'étape d'inversion 108 peut être mise en oeuvre en utilisant un estimateur bayésien, afin d'estimer des paramètres recherchés, en l'occurrence les valeurs de proportions $\{C_1, ..., C_j, ..., C_N\}$ des N espèces gazeuses $\{G_1, ..., G_j, ..., G_N\}$ à identifier ou déjà identifiées dans l'échantillon E. Il peut s'agir par exemple un estimateur d'espérance à posteriori si l'on souhaite avoir une méthode d'estimation robuste au bruit. Cet estimateur est lui-même calculé à l'aide d'une méthode de Monte Carlo par Chaîne de Markov dont les échantillons sont obtenus par une boucle de Gibbs. Un enseignement d'une telle façon de procéder peut par exemple être trouvé dans la demande de brevet européen publiée sous le numéro EP 2 028 486 A1 ou dans celle publiée sous le numéro EP 2 509 018 A1. D'autres estimateurs bayésiens, tels qu'un estimateur de maximum a priori, peuvent être utilisés.

En variante également, on peut vouloir déterminer la composition du mélange gazeux analysé, non pas en fonction des N espèces gazeuses connues, mais en fonction de P matériaux gazeux, chacun des matériaux gazeux étant composé d'au moins une partie des N espèces gazeuses, sachant que ce nombre P et l'identité des matériaux dans l'échantillon E sont connus et sachant en outre que les proportions relatives de chaque espèce gazeuse, dans chacun des P matériaux gazeux de l'échantillon E, sont connues ou prédéterminées.

Dans cas, il convient de projeter le signal électrique $g_k(t)$ débruité, non pas dans la base $(P_j(t,\theta_j) * r_j(t))_{1 \leq j \leq N}$, mais dans une base propre aux matériaux notée $(E_i(t))_{1 \leq i \leq P}$. Il est simple d'exprimer les vecteurs de cette base en fonction des vecteurs de la base $(P_j(t,\theta_j) * r_j(t))_{1 \leq j \leq N}$. En effet, les probabilités notées $p_{i,j}$, exprimant chacune la probabilité qu'une molécule du i-ième matériau soit de l'espèce gazeuse Gj, sont généralement connues ou prédéterminées, de sorte que chaque vecteur de la base $(E_i(t))_{1 \leq i \leq P}$ peut être exprimé sous la forme d'une loi de probabilité :

$$E_i(t) = \sum_{j=1}^{N} p_{i,j} \cdot P_j(t, \theta_j) * r_j(t).$$

Comme précédemment, la projection est par exemple réalisée par minimisation de l'écart quadratique entre le signal électrique $g_k(t)$ débruité et l'espace vectoriel engendré par la base $(E_i(t))_{1 \leq i \leq P}$. On obtient alors des valeurs de proportions, $C'_i$, $1 \leq i \leq P$, de chaque matériau gazeux dans le mélange.

D'une façon plus générale, la détermination des grandeurs recherchées, en l'occurrence celle des valeurs de proportions $C'_i$ de chaque matériau gazeux dans le mélange, est obtenue par une méthode d'inversion du signal électrique ($g_k(t)$) dans la base constituée par les vecteurs de base $(E_i(t))_{1 \leq i \leq P}$. Ainsi, comme précédemment et selon une variante, l'étape d'inversion 108 peut être mise en oeuvre en utilisant un estimateur bayésien.

Conformément à une autre application, par exemple de détection d'espèces gazeuses dans un mélange gazeux qui n'est pas connu *a priori*, il n'est pas possible de constituer la base $(P_j(t,\theta_j) * r_j(t))_{1 \leq j \leq N}$ au cours de la phase 100 puisque les espèces gazeuses de l'échantillon E ne sont pas identifiées.

Dans ce cas, les paramètres techniques $k_{a,j}$, $k_{d,j}$, $t_0$, $k_{a,j}^{NEMS}$, $k_{d,j}^{NEMS}$ et $T_e$ sont toujours déterminés au cours de la phase de calibrage et d'initialisation 100. En revanche, ce n'est plus une base mais un dictionnaire redondant de noyaux vectoriels ou vecteurs de base désignés par le terme d'« atomes », formant idéalement chacun l'identification d'une espèce gazeuse potentiellement présente dans l'échantillon E, qui est constitué. Le dictionnaire comporte avantageusement un nombre N' d'atomes, N' étant supérieur ou égal au nombre N d'espèces gazeuses présentes dans l'échantillon E. Si la chaîne de traitement a pu être calibrée avec N espèces gazeuses connues, le dictionnaire peut être constitué à partir de l'ensemble $\{P_j(t,\theta_j) * r_j(t)\}_{1 \leq j \leq N}$ destiné à être stocké dans la base de données 26, cet ensemble pouvant être complété de noyaux vectoriels obtenus :

-   soit à partir des noyaux vectoriels $\{P_j(t,\theta_j) * r_j(t)\}_{1 \leq j \leq N}$ en modulant la valeur de certains paramètres techniques, par exemple choisis parmi ceux de la colonne de chromatographie 16 ou du détecteur électromécanique de gaz 18,
-   soit à partir d'un modèle arbitraire de bruit, décrivant notamment la ligne de base du signal électrique.

La succession d'étapes 102 à 108 est alors identique à celle décrite dans le cas de la première application, à l'exception de l'étape d'inversion 108 au cours de laquelle la projection est remplacée par une expression du signal électrique $g_k(t)$ à l'aide d'au moins une partie des atomes du dictionnaire, chaque atome étant associé à un vecteur de base pouvant être :

-   soit obtenu à partir des vecteurs $\{P_j(t,\theta_j) * r_j(t)\}_{1 \leq j \leq N}$ en modulant la valeur de certains paramètres techniques, par exemple choisis parmi ceux de la colonne de chromatographie 16 ou du détecteur électromécanique de gaz 18,
-   soit à partir d'un modèle arbitraire de bruit, décrivant notamment la ligne de base du signal électrique.

L'inversion du signal selon le dictionnaire ainsi constitué permet d'établir des composantes du signal, la valeur de proportion d'une espèce recherchée dépendant d'une pluralité de composantes.

Comme indiqué précédemment, la connaissance des valeurs de proportions $\{C_1, ..., C_j, ..., C_N\}$ des espèces gazeuses de l'échantillon E permet de retrouver très simplement le pouvoir calorifique du gaz dont est extrait l'échantillon.

D'une façon générale, pour définir le dictionnaire au cours de la phase 100 et procéder à l'inversion de modèle de l'étape 108, il peut être procédé à une analyse en valeurs principales, une analyse en valeurs indépendantes, ou une analyse en valeurs parcimonieuses.

L'analyse en valeurs principales fournit des atomes qui illustrent le maximum de variance des données, mais présente l'inconvénient de requérir une distribution gaussienne des données et d'imposer une orthogonalité entre composantes.

L'analyse en composantes indépendantes ne présente pas cet inconvénient en n'imposant pas l'orthogonalité des composantes et en n'exigeant pas que la distribution gaussienne des données soit vérifiée.

L'analyse en composantes parcimonieuses fournit un dictionnaire largement redondant dont les atomes présentent une propriété de parcimonie. La redondance se traduit par le grand nombre d'atomes dans le dictionnaire et la parcimonie consiste à définir un objet (l'échantillon E) avec un minimum de causes élémentaires (les atomes). La parcimonie permet donc de choisir les atomes les plus pertinents, tandis que la redondance assure une description fidèle des compositions possibles. Cette méthode se révèle utile dans les cas où l'analyse en composantes indépendantes ne fournit pas un nombre d'atomes suffisant pour décrire les données.

Ces trois types d'analyses pour exprimer un signal à l'aide des noyaux vectoriels de dictionnaires sont bien connus de sorte qu'elles ne seront pas détaillées. Elles peuvent mettre en oeuvre des algorithmes de décomposition du signal s'inspirant par exemple de procédés itératifs tels que Matching Pursuit ou Orthogonal Matching Pursuit.

En variante et comme précédemment évoqué, on peut vouloir déterminer la composition du mélange gazeux analysé, non pas en fonction d'au moins N' espèces gazeuses d'un dictionnaire, mais en fonction de P' matériaux gazeux d'un dictionnaire, chacun étant composé d'au moins une partie des N' espèces gazeuses, les proportions relatives de chacune desdites espèces gazeuses dans chacun desdits matériaux gazeux étant connues ou prédéterminées. L'adaptation du dictionnaire se fait de la même façon que l'adaptation de la base de projection détaillée précédemment.

Il apparaît clairement qu'un procédé tel que celui décrit précédemment, mis en oeuvre par le dispositif 10, permet, grâce à une modélisation probabiliste fine de la chaîne de traitement 12, de fournir une estimation fiable de la composition gazeuse d'un échantillon E. En particulier, ce procédé excelle à évaluer individuellement les proportions des espèces gazeuses de l'échantillon, ce que les méthodes d'analyse classiques réalisent moins bien.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

Ainsi par exemple, le modèle probabiliste direct établi précédemment pour représenter le signal électrique $g_k(t)$ peut être affiné ou au contraire simplifié.

Notamment, dans une application où la composition précise $\{C_1, ..., C_j, ..., C_N\}$ d'un gaz n'est pas recherchée, mais où simplement des espèces gazeuses considérées comme dangereuses doivent être identifiées, le problème de détection peut être reformulé comme un problème d'estimation d'une variable binaire $\delta$ définissant la présence ($\delta = 1$) ou l'absence ($\delta = 0$) de molécules d'une espèce gazeuse. Une telle variable binaire $\delta$ peut alors être intégrée au modèle probabiliste direct et le simplifier.

Il est possible également d'approcher l'expression $f_{heaviside}(t)\, e^{-k_{d,j}^{NEMS}\, t}$ par une distribution de Dirac dans le modèle présenté précédemment. Il faut pour cela que la largeur caractéristique de la composante exponentielle $\left(\frac{1}{k_{d,j}^{NEMS}}\right)$ soit suffisamment petite devant la largeur caractéristique du pic de la loi de probabilité $P_j(t, \theta_j)$, c'est-à-dire le deuxième moment de cette loi.

En variante également, certains facteurs de complexité peuvent être pris en compte dans le modèle probabiliste direct, tels que l'hétérogénéité des sites d'adsorption ou les problèmes de diffusion dans la colonne de chromatographie, le fait que l'injection de l'échantillon E ne soit pas idéale (i.e. volume non nul ne pouvant être négligé), l'existence de volumes morts, etc.

Plus généralement, dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

**Revendications**

1. Procédé de détermination d'une composition ($\{C_j\}$, $\{C'_i\}$) d'un échantillon gazeux (E) traité par chromatographie gazeuse, comportant les étapes suivantes :

   - faire passer (102) l'échantillon (E) par une chaîne de traitement (12) comportant une colonne de chromatographie gazeuse (16) et un détecteur de gaz (18) disposé en sortie de la colonne de chromatographie gazeuse (16),
   - obtenir (104), en sortie du détecteur de gaz (18), un signal électrique ($g_k(t)$) représentatif de la composition ($\{C_j\}$, $\{C'_i\}$) de l'échantillon (E),
   - déterminer (108) la composition ($\{C_j\}$, $\{C'_i\}$) de l'échantillon (E) à l'aide d'un dispositif (22) de traitement de ce signal électrique,

**caractérisé en ce que** la détermination (108) de la composition de l'échantillon (E) se fait sur la base d'une combinaison stockée en mémoire (26) :

- d'un modèle probabiliste direct ($P_j$) de la colonne de chromatographie gazeuse (16), ce modèle comportant au moins une loi de probabilité définissant, pour au moins une espèce gazeuse susceptible de se trouver dans l'échantillon, une probabilité à chaque instant qu'une molécule de cette espèce gazeuse sorte de la colonne de chromatographie, et
- d'un modèle de réponse impulsionnelle ($r_j$) du détecteur de gaz (18),

et **en ce que** l'étape de détermination (108) est réalisée par inversion de cette combinaison de modèles ($P_j$, $r_j$) à partir du signal électrique ($g_k(t)$), l'inversion étant exécutée par le dispositif de traitement (22) disposant de moyens d'accès à la mémoire (26).

2. Procédé de détermination d'une composition ($\{C_j\}$, $\{C'_i\}$) d'un échantillon gazeux (E) selon la revendication 1, dans lequel le modèle probabiliste direct ($P_j$) de la colonne de chromatographie gazeuse (16) comporte une loi de probabilité définie pour chaque espèce gazeuse d'un ensemble de référence d'espèces gazeuses prédéterminées, cette loi de probabilité définissant une probabilité à chaque instant qu'une molécule de l'espèce gazeuse considérée sorte de la colonne de chromatographie (16) et les paramètres de cette loi étant exprimés en fonction de paramètres techniques ($k_{a,j}, k_{d,j}, t_0$) de la colonne de chromatographie incluant :

- un facteur ($k_{a,j}$) d'adsorption de l'espèce gazeuse considérée dans la colonne de chromatographie (16),
- un facteur ($k_{d,j}$) de désorption de l'espèce gazeuse considérée dans la colonne de chromatographie (16),
- un temps mort ($t_0$) correspondant au temps mis par un gaz porteur sans affinité avec sa paroi pour traverser cette colonne de chromatographie (16).

3. Procédé de détermination d'une composition ($\{C_j\}$, $\{C'_i\}$) d'un échantillon gazeux (E) selon la revendication 2, dans lequel la loi de probabilité définie pour chaque espèce gazeuse dans le modèle probabiliste direct de la colonne de chromatographie gazeuse (16) présente la forme suivante :

$$P_j\big(t,\theta_j\big) = \frac{\sqrt{4 \cdot k_{a,j} \cdot k_{d,j} \cdot t_0 \cdot t}}{2 \cdot t} \cdot I_1 \cdot \left(\sqrt{4 \cdot k_{a,j} \cdot k_{d,j} \cdot t_0 \cdot t}\right) \cdot e^{-k_{a,j} \cdot t_0 - k_{d,j} \cdot t},$$

où $t$ est le temps, $t \geq 0$, l'indice j identifie l'espèce gazeuse considérée, $k_{a,j}$ est le facteur d'adsorption de cette espèce gazeuse dans la colonne de chromatographie, $k_{d,j}$ est le facteur de désorption de cette espèce gazeuse dans la colonne de chromatographie, $\theta_j = (k_{a,j}, k_{d,j})$, $I_1$ est la fonction de Bessel modifiée de première espèce et de premier ordre et $t_0$ est le temps mort de la colonne de chromatographie.

4. Procédé de détermination d'une composition ($\{C_j\}$, $\{C'_i\}$) d'un échantillon gazeux (E) selon l'une quelconque des revendications 1 à 3, dans lequel le modèle de réponse impulsionnelle ($r_j$) du détecteur de gaz (18) comporte une loi de probabilité définie pour chaque espèce gazeuse d'un ensemble de référence d'espèces gazeuses prédéterminées, cette loi de probabilité définissant une réponse impulsionnelle probabiliste du détecteur électromécanique de gaz (18) à une impulsion que constitue une molécule de l'espèce gazeuse considérée.

5. Procédé de détermination d'une composition ($\{C_j\}$, $\{C'_i\}$) d'un échantillon gazeux (E) selon la revendication 4, dans lequel le détecteur de gaz (18) est un détecteur électromécanique de gaz et les paramètres de chaque loi de probabilité dudit modèle de réponse impulsionnelle ($r_j$) sont exprimés en fonction de paramètres techniques $\left(k_{a,j}^{NEMS}, k_{d,j}^{NEMS}, T_e\right)$ du détecteur électromécanique de gaz incluant :

- un facteur d'adsorption $\left(k_{a,j}^{NEMS}\right)$ de l'espèce gazeuse considérée dans le détecteur électromécanique de gaz (18),
- un facteur de désorption $\left(k_{d,j}^{NEMS}\right)$ de l'espèce gazeuse considérée dans le détecteur électromécanique de gaz (18),
- un temps d'interaction ($T_e$) correspondant au temps de présence d'une molécule en phase mobile au regard du détecteur électromécanique de gaz (18).

**6.** Procédé de détermination d'une composition ({C$_j$}, {C'$_i$}) d'un échantillon gazeux (E) selon la revendication 5, dans lequel la loi de probabilité définie pour chaque espèce gazeuse dans le modèle de réponse impulsionnelle du détecteur électromécanique de gaz (18) présente la forme suivante :

$$r_j(t) = mm_j \cdot \left(1 - e^{-k_{a,j}^{NEMS} \cdot T_e}\right) \cdot f_{heaviside}(t) \cdot e^{-k_{d,j}^{NEMS} \cdot t},$$

où $t$ est le temps, l'indice j identifie l'espèce gazeuse considérée, $mm_j$ est la masse moléculaire de cette espèce gazeuse, $k_{a,j}^{NEMS}$ est le facteur d'adsorption de cette espèce gazeuse dans le détecteur électromécanique de gaz, $k_{d,j}^{NEMS}$ est le facteur de désorption de cette espèce gazeuse dans le détecteur électromécanique de gaz, $f_{heaviside}$ est la fonction de Heaviside et $T_e$ est le temps d'intégration du détecteur électromécanique de gaz.

**7.** Procédé de détermination d'une composition ({C$_j$}, {C'$_i$}) d'un échantillon gazeux (E) selon les revendications 2 et 5, dans lequel la combinaison des modèles ($P_j$, $r_j$) stockée en mémoire (26) est une combinaison linéaire de produits de convolution entre les lois de probabilité du modèle probabiliste direct de la colonne de chromatographie gazeuse (16) et les lois de probabilité du modèle de réponse impulsionnelle du détecteur électromécanique de gaz (18), cette combinaison linéaire prenant la forme suivante :

$$g_k(t) = g_{0,k} - \alpha_k \sum_{j=1}^{N} C_j \cdot P_j(t, \theta_j) * r_j(t) + \varepsilon(t),$$

où $t$ est le temps, l'indice k identifie un mode fondamental ou harmonique de fréquence de résonance du détecteur électomécanique de gaz, $g_k(t)$ est une fréquence instantanée de résonance de mode k du détecteur électromécanique de gaz, cette fréquence instantanée formant le signal électrique obtenu à sa sortie, $g_{0,k}$ est une fréquence instantanée de résonance de mode k à vide du détecteur électromécanique de gaz, $\alpha_k$ est une constante de pondération pour le mode k, N est le nombre d'espèces gazeuses dans l'échantillon, l'indice j identifie une espèce gazeuse, $C_j$ est la concentration moléculaire de cette espèce gazeuse dans l'échantillon, $P_j(t, \theta_j)$ est la loi de probabilité du modèle probabiliste direct de la colonne de chromatographie gazeuse pour cette espèce gazeuse, $r_j(t)$ est la loi de probabilité du modèle de réponse impulsionnelle du détecteur de gaz pour cette espèce gazeuse et $\varepsilon(t)$ est un modèle probabiliste de bruit.

**8.** Procédé de détermination d'une composition ({C$_j$}) d'un échantillon gazeux (E) selon l'une quelconque des revendications 1 à 7, dans lequel l'inversion de ladite combinaison de modèles comporte les étapes suivantes :

- constitution d'une base de N vecteurs représentatifs de N espèces gazeuses connues de l'échantillon, chaque vecteur de cette base étant défini sous la forme $P_j(t, \theta_j) * r_j(t)$ où $P_j(t, \theta_j)$ est la loi de probabilité du modèle probabiliste direct de la colonne de chromatographie gazeuse (16) pour la j-ième espèce gazeuse et $r_j(t)$ est le modèle de réponse impulsionnelle du détecteur de gaz (18) pour la j-ième espèce gazeuse,
- inversion de ladite combinaison de modèles ($P_j$, $r_j$) à partir du signal électrique {$g_k(t)$} de façon à obtenir une valeur de proportion pour chaque espèce gazeuse de l'échantillon (E).

**9.** Procédé de détermination d'une composition ({C$_j$}) d'un échantillon gazeux (E) selon l'une quelconque des revendications 1 à 7, dans lequel l'inversion de ladite combinaison de modèles comporte les étapes suivantes :

- constitution d'une base de N vecteurs représentatifs de N espèces gazeuses connues de l'échantillon, chaque vecteur de cette base étant défini sous la forme $P_j(t, \theta_j) * r_j(t)$ où $P_j(t, \theta_j)$ est la loi de probabilité du modèle probabiliste direct de la colonne de chromatographie gazeuse (16) pour la j-ième espèce gazeuse et $r_j(t)$ est le modèle de réponse impulsionnelle du détecteur de gaz (18) pour la j-ième espèce gazeuse,
- constitution d'un dictionnaire de N' noyaux vectoriels représentatifs, avec N' $\geq$ N, chaque espèce gazeuse étant associée à un ou plusieurs noyaux vectoriels, chaque noyau vectoriel étant obtenu :

• soit à partir des vecteurs $(P_j(t, \theta_j) * r_j(t))_{1 \leq j \leq N}$ en modulant la valeur de certains paramètres techniques, par exemple choisis parmi $k_{a,j}$, $k_{d,j}$, $k_{a,j}^{NEMS}$, $k_{d,j}^{NEMS}$, $t_0$, $T_e$,

• soit à partir d'un modèle arbitraire de bruit, décrivant notamment une ligne de base du signal électrique,

- inversion de ladite combinaison de modèles ($P_j$, $r_j$) à partir du signal électrique ($g_k(t)$) de façon à obtenir une valeur de proportion pour chaque espèce gazeuse de l'échantillon (E).

**10.** Procédé de détermination d'une composition ({C'$_i$}) d'un échantillon gazeux (E) selon l'une quelconque des revendications 1 à 7, dans lequel l'inversion de ladite combinaison de modèles comporte les étapes suivantes :

- constitution d'une base de P vecteurs représentatifs de P matériaux gazeux connus ou prédéterminés de l'échantillon, chaque vecteur de cette base étant défini sous la forme $E_i(t) = \sum_{j=1}^{N} p_{i,j} \cdot P_j(t, \theta_j) * r_j(t)$ où $P_j(t, \theta_j)$ est la loi de probabilité du modèle probabiliste direct de la colonne de chromatographie gazeuse (16) pour la j-ième espèce gazeuse, $r_j(t)$ est le modèle de réponse impulsionnelle du détecteur de gaz (18) pour la j-ième espèce gazeuse et $p_{i,j}$ exprime la probabilité qu'une molécule du i-ième matériau gazeux soit de la j-ième espèce gazeuse,
- inversion de ladite combinaison de modèles ($P_j$, $r_j$) à partir du signal électrique ($g_k(t)$) de façon à obtenir une valeur de proportion pour chaque matériau gazeux de l'échantillon (E).

**11.** Procédé de détermination d'une composition ({C'$_i$}) d'un échantillon gazeux (E) selon l'une quelconque des revendications 1 à 7, dans lequel l'inversion de ladite combinaison de modèles comporte les étapes suivantes :

- constitution d'une base de P vecteurs représentatifs de P matériaux gazeux connus ou prédéterminés de l'échantillon, chaque vecteur de cette base étant défini sous la forme $E_i(t) = \sum_{j=1}^{N} p_{i,j} \cdot P_j(t, \theta_j) * r_j(t)$ où $P_j(t, \theta_j)$ est la loi de probabilité du modèle probabiliste direct de la colonne de chromatographie gazeuse (16) pour la j-ième espèce gazeuse, $r_j(t)$ est le modèle de réponse impulsionnelle du détecteur de gaz (18) pour la j-ième espèce gazeuse et $p_{i,j}$ exprime la probabilité qu'une molécule du i-ième matériau gazeux soit de la j-ième espèce gazeuse,
- constitution d'un dictionnaire de P' noyaux vectoriels représentatifs, avec P' ≥ P, chaque matériau gazeux étant associé à un ou plusieurs noyaux vectoriels, chaque noyau vectoriel étant obtenu :

• soit à partir des vecteurs $(E_i(t))_{1 \leq i \leq P}$ en modulant la valeur de certains paramètres techniques, par exemple choisis parmi $k_{a,j}$,

$$k_{d,j}, k_{a,j}^{NEMS}, k_{d,j}^{NEMS}, t_0, T_e,$$

• soit à partir d'un modèle arbitraire de bruit, décrivant notamment une ligne de base du signal électrique,

- inversion de ladite combinaison de modèles ($P_j$, $r_j$) à partir du signal électrique ($g_k(t)$) de façon à obtenir une valeur de proportion pour chaque matériau gazeux de l'échantillon (E).

**12.** Procédé de détermination d'une composition ({C$_j$}, {C'$_i$}) d'un échantillon gazeux (E) selon l'une quelconque des revendications 1 à 11, dans lequel l'étape (108) de détermination par inversion met en oeuvre un estimateur bayésien.

**13.** Procédé de détermination d'une composition ({C$_j$}, {C'$_i$}) d'un échantillon gazeux (E) selon l'une quelconque des revendications 1 à 12, dans lequel le signal électrique ($g_k(t)$) obtenu en sortie du détecteur de gaz (18) est préalablement débruité (106) avant exécution de l'étape de détermination (108), ce débruitage incluant la suppression d'une ligne de base et étant réalisé par une décomposition en ondelettes du signal électrique ($g_k(t)$) et une sélection d'une partie seulement des composantes d'ondelettes obtenues.

**14.** Dispositif de détermination d'une composition ({C$_j$}, {C'$_i$}) d'un échantillon gazeux (E) traité par chromatographie gazeuse, comportant :

- une chaîne de traitement (12) de l'échantillon (E) comportant une colonne de chromatographie gazeuse (16) et un détecteur de gaz (18) disposé en sortie de la colonne de chromatographie gazeuse (16), conçue pour la fourniture d'un signal ($g_k(t)$) représentatif de la composition ({C$_j$}, {C'$_i$}) de l'échantillon (E), et

- un dispositif (14) de traitement de signal conçu matériellement ou programmé pour appliquer, en combinaison avec la chaîne de traitement (12), un procédé de détermination de la composition de l'échantillon gazeux (E) selon l'une quelconque des revendications 1 à 13.

**15.** Dispositif de détermination d'une composition ($\{C_j\}$) en espèces gazeuses d'un échantillon (E) selon la revendication 14, dans lequel le détecteur de gaz (18) est un détecteur électromécanique NEMS.

**Patentansprüche**

**1.** Verfahren zur Bestimmung einer Zusammensetzung ($\{C_j\}$, $\{C'_i\}$) einer gasförmigen Probe (E), die durch Gaschromatographie behandelt wurde, umfassend die folgenden Schritte:

- Führen (102) der Probe (E) durch eine Behandlungskette (12), umfassend eine Gaschromatographiesäule (16) und einen Gasdetektor (18), der am Ausgang der Gaschromatographiesäule (16) angeordnet ist,
- Erhalten (104), am Ausgang des Gasdetektors (18), eines elektrischen Signals $(g_k(t))$, das repräsentativ für die Zusammensetzung ($\{C_j\}$, $\{C'_i\}$) der Probe (E) ist,
- Bestimmen (108) der Zusammensetzung ($\{C_j\}$, $\{C'_i\}$) der Probe (E) mit Hilfe einer Vorrichtung (22) zur Behandlung dieses elektrischen Signals,

**dadurch gekennzeichnet, dass** die Bestimmung (108) der Zusammensetzung der Probe (E) auf der Grundlage einer Kombination erfolgt, die im Speicher (26) abgelegt ist:

- eines direkten Wahrscheinlichkeitsmodells $(P_j)$ der Gaschromatographiesäule (16), wobei dieses Modell mindestens ein Wahrscheinlichkeitsgesetz umfasst, das für mindestens eine Gasart, die in der Probe gefunden werden kann, in jedem Moment eine Wahrscheinlichkeit definiert, dass ein Molekül dieser Gasart aus der Chromatographiesäule austritt, und
- eines Impulsantwortmodells $(r_j)$ des Gasdetektors (18),

und dadurch, dass der Schritt des Bestimmens (108) durch die Inversion dieser Kombination von Modellen $(P_j, r_j)$ auf der Grundlage des elektrischen Signals $(g_k(t))$ durchgeführt wird, wobei die Inversion durch die Vorrichtung zur Behandlung (22) ausgeführt wird, die über Zugangsmittel zum Speicher (26) verfügt.

**2.** Verfahren zur Bestimmung einer Zusammensetzung ($\{C_j\}$, $\{C'_i\}$) einer gasförmigen Probe (E) nach Anspruch 1, wobei das direkte Wahrscheinlichkeitsmodell $(P_j)$ der Gaschromatographiesäule (16) ein Wahrscheinlichkeitsgesetz umfasst, das für jede Gasart einer Referenzeinheit von vorbestimmten Gasarten definiert ist, wobei dieses Wahrscheinlichkeitsgesetz in jedem Moment eine Wahrscheinlichkeit definiert, dass ein Molekül der in Betracht gezogenen Gasart aus der Chromatographiesäule (16) austritt, und wobei die Parameter dieses Gesetztes je nach technischen Parametern $(k_{a,j}, k_{d,j}, t_o)$ der Chromatographiesäule exprimiert sind, umfassend:

- einen Faktor $(k_{a,j})$ der Adsorption der in Betracht gezogenen Gasart in der Chromatographiesäule (16),
- einen Faktor $(k_{d,j})$ der Desorption der in Betracht gezogenen Gasart in der Chromatographiesäule (16),
- eine Totzeit $(t_o)$, die der Zeit entspricht, die ein Trägergas ohne Affinität mit seiner Wand benötigt, um diese Chromatographiesäule (16) zu durchqueren.

**3.** Verfahren zur Bestimmung einer Zusammensetzung ($\{C_j\}$, $\{C'_i\}$) einer gasförmigen Probe (E) nach Anspruch 2, wobei das Wahrscheinlichkeitsgesetz, das für jede Gasart im direkten Wahrscheinlichkeitsmodell der Gaschromatographiesäule (16) definiert ist, die folgende Form aufweist:

$$P_j(t, \theta_j) = \frac{\sqrt{4 \cdot k_{a,j} \cdot k_{d,j} \cdot t_0 \cdot t}}{2 \cdot t} \cdot I_1 \cdot \left( \sqrt{4 \cdot k_{a,j} \cdot k_{d,j} \cdot t_0 \cdot t} \right) \cdot e^{-k_{a,j} t_0 - k_{d,j} \cdot t},$$

wobei $t$ die Zeit ist, $t \geq 0$ ist, der Index j die in Betracht gezogene Gasart identifiziert, $k_{a,j}$ der Faktor der Adsorption dieser Gasart in der Chromatographiesäule ist, $k_{d,j}$ der Faktor der Desorption dieser Gasart in der Chromatographiesäule ist, $\theta_j = (k_{a,j}, k_{d,j})$, $I_1$ die modifizierte Bessel-Funktion erster Art und erster Ordnung ist, und $t_o$ die Totzeit der Chromatographiesäule ist.

4. Verfahren zur Bestimmung einer Zusammensetzung ({C$_j$}, {C'$_i$}) einer gasförmigen Probe (E) nach einem der Ansprüche 1 bis 3, wobei das Impulsantwortmodell *(r$_j$)* des Gasdetektors (18) ein Wahrscheinlichkeitsgesetz, das für jede Gasart definiert ist, einer Referenzeinheit von vorbestimmten Gasarten umfasst, wobei dieses Wahrscheinlichkeitsgesetz eine wahrscheinliche Impulsantwort des elektromechanischen Gasdetektors (18) auf einen Impuls definiert, der ein Molekül der in Betracht gezogenen Gasart darstellt.

5. Verfahren zur Bestimmung einer Zusammensetzung ({C$_j$}, {C'$_i$}) einer gasförmigen Probe (E) nach Anspruch 4, wobei der Gasdetektor (18) ein elektromagnetischer Gasdetektor ist und die Parameter jedes Wahrscheinlichkeitsgesetzes des Impulsantwortmodells *(r$_j$)* je nach technischen Parametern $\left(k_{a,j}^{NEMS}, k_{d,j}^{NEMS}, T_e\right)$ des elektromagnetischen Gasdetektors exprimiert sind, umfassend:

   - einen Faktor der Adsorption $\left(k_{a,j}^{NEMS}\right)$ der in Betracht gezogenen Gasart im elektromagnetischen Gasdetektor (18),

   - einen Faktor der Desorption $\left(k_{d,j}^{NEMS}\right)$ der in Betracht gezogenen Gasart im elektromagnetischen Gasdetektor (18),

   - eine Interaktionszeit *(T$_e$)*, die der Zeit der Anwesenheit eines Moleküls in der mobilen Phase angesichts des elektromagnetischen Gasdetektors (18) entspricht.

6. Verfahren zur Bestimmung einer Zusammensetzung ({C$_j$}, {C'$_i$}) einer gasförmigen Probe (E) nach Anspruch 5, wobei das Wahrscheinlichkeitsgesetz, das für jede Gasart im Impulsantwortmodell des elektromagnetischen Gasdetektors (18) definiert ist, die folgende Form aufweist:

$$r_j(t) = mm_j \cdot \left(1 - e^{-k_{a,j}^{NEMS} \cdot T_e}\right) \cdot f_{heaviside}(t) \cdot e^{-k_{d,j}^{NEMS} \cdot t},$$

wobei *t* die Zeit ist, der Index j die in Betracht gezogene Gasart identifiziert, *mm$_j$* die Molekularmasse dieser Gasart ist, $k_{a,j}^{NEMS}$ der Faktor der Adsorption dieser Gasart im elektromagnetischen Gasdetektor ist, $k_{d,j}^{NEMS}$ der Faktor der Desorption dieser Gasart im elektromagnetischen Gasdetektor ist, *f$_{heaviside}$* die Heaviside-Funktion ist und *T$_e$* die Integrationszeit des elektromagnetischen Gasdetektors ist.

7. Verfahren zur Bestimmung einer Zusammensetzung ({C$_j$}, {C'$_i$}) einer gasförmigen Probe (E) nach den Ansprüchen 2 und 5, wobei die Kombination der Modelle *(P$_j$, r$_j$)*, die im Speicher (26) abgelegt sind, eine lineare Kombination der Konvolutionsprodukte zwischen den Wahrscheinlichkeitsgesetzen des direkten Wahrscheinlichkeitsmodells der Gaschromatographiesäule (16) und den Wahrscheinlichkeitsgesetzen des Impulsantwortmodells des elektromagnetischen Gasdetektors (18) ist, wobei diese lineare Kombination die folgende Form annimmt:

$$g_k(t) = g_{0,k} - \alpha_k \sum_{j=1}^{N} C_j \cdot P_j(t, \theta_j) * r_j(t) + \varepsilon(t),$$

wobei *t* die Zeit ist, der Index k ein grundlegendes oder harmonisches Modul der Resonanzfrequenz des elektromagnetischen Gasdetektors identifiziert, *g$_k$(t)* eine unmittelbare Resonanzfrequenz des Modus k des elektromagnetischen Gasdetektors ist, wobei diese unmittelbare Frequenz das elektrische Signal bildet, das an seinem Ausgang erhalten wird, *g$_{o,k}$* eine unmittelbare Resonanzfrequenz des leeren Modus k des elektromagnetischen Gasdetektors ist, *α$_k$* eine Gewichtungskonstante für den Modus k ist, N die Anzahl von Gasarten in der Probe ist, der Index j eine Gasart identifiziert, *C$_j$* die Molekularkonzentration dieser Gasart in der Probe ist, *P$_j$(t, θ$_j$)* das Wahrscheinlichkeitsgesetz des direkten Wahrscheinlichkeitsmodells der Gaschromatographiesäule für diese Gasart ist, *r$_j$(t)* das Wahrscheinlichkeitsgesetz des Impulsantwortmodells des Gasdetektors für diese Gasart ist, und *ε(t)* ein Rausch-Wahrscheinlichkeitsmodell ist.

8. Verfahren zur Bestimmung einer Zusammensetzung ({C$_j$}) einer gasförmigen Probe (E) nach einem der Ansprüche 1 bis 7, wobei die Inversion der Kombination von Modellen die folgenden Schritte umfasst:

- Aufbau einer Basis von N Vektoren, die repräsentativ für N bekannte Gasarten der Probe sind, wobei jeder Vektor dieser Basis in der Form $P_j(t, \theta_j) * r_j(t)$ definiert ist, wobei $P_j(t, \theta_j)$ das Wahrscheinlichkeitsgesetz des direkten Wahrscheinlichkeitsmodells der Gaschromatographiesäule (16) für die j-te Gasart ist und $r_j(t)$ das Impulsantwortmodell des Gasdetektors (18) für die j-te Gasart ist,

- Inversion der Kombination von Modellen $(P_j, r_j)$ auf der Grundlage des elektrischen Signals $(g_k(t))$, um einen Proportionswert für jede Gasart der Probe (E) zu erhalten.

9. Verfahren zur Bestimmung einer Zusammensetzung ($\{C_j\}$) einer gasförmigen Probe (E) nach einem der Ansprüche 1 bis 7, wobei die Inversion der Kombination von Modellen die folgenden Schritte umfasst:

- Aufbau einer Basis von N Vektoren, die repräsentativ für N bekannte Gasarten der Probe sind, wobei jeder Vektor dieser Basis in der Form $P_j(t, \theta_j) * r_j(t)$ definiert ist, wobei $P_j(t, \theta_j)$ das Wahrscheinlichkeitsgesetz des direkten Wahrscheinlichkeitsmodells der Gaschromatographiesäule (16) für die j-te Gasart ist und $r_j(t)$ das Impulsantwortmodell des Gasdetektors (18) für die j-te Gasart ist,

- Aufbau eines Nachschlagewerks mit N' repräsentativen Vektorkernen, wobei N' $\geq$ N, wobei jede Gasart mit einem oder mit mehreren Vektorkernen assoziiert ist, wobei jeder Vektorkern erhalten wird:

-- entweder auf der Grundlage der Vektoren $(P_j(t, \theta_j) * r_j(t))_{1 \leq j \leq N}$ durch die Modulierung des Werts von bestimmten technischen Parametern, z. B. ausgewählt aus $k_{a,j}$, $k_{d,j}$, $k_{a,j}^{NEMS}$, $k_{d,j}^{NEMS}$, $t_0$, $T_e$, ,

-- oder auf der Grundlage eines zufälligen Rauschmodells, das insbesondere eine Basislinie des elektrischen Signals beschreibt,

- Inversion der Kombination von Modellen $(P_j, r_j)$ auf der Grundlage des elektrischen Signals $(g_k(t))$, um einen Proportionswert für jede Gasart der Probe (E) zu erhalten.

10. Verfahren zur Bestimmung einer Zusammensetzung ($\{C'_i\}$) einer gasförmigen Probe (E) nach einem der Ansprüche 1 bis 7, wobei die Inversion der Kombination von Modellen die folgenden Schritte umfasst:

- Aufbau einer Basis von P Vektoren, die repräsentativ für P bekannte oder vorbestimmte gasförmige Materialien der Probe sind, wobei jeder Vektor dieser Basis in der Form $E_i(t) = \sum_{j=1}^{N} p_{i,j} \cdot P_j(t, \theta_j) * r_j(t)$ definiert ist, wobei $P_j(t, \theta_j)$ das Wahrscheinlichkeitsgesetz des direkten Wahrscheinlichkeitsmodells der Gaschromatographiesäule (16) für die j-te Gasart ist, $r_j(t)$ das Impulsantwortmodell des Gasdetektors (18) für die j-te Gasart ist und $p_{i,j}$ die Wahrscheinlichkeit exprimiert, dass ein Molekül des i-ten gasförmigen Materials der j-ten Gasart ist,

- Inversion der Kombination von Modellen $(P_j, r_j)$ auf der Grundlage des elektrischen Signals $(g_k(t))$, um einen Proportionswert für jedes gasförmige Material der Probe (E) zu erhalten.

11. Verfahren zur Bestimmung einer Zusammensetzung ($\{C'_i\}$) einer gasförmigen Probe (E) nach einem der Ansprüche 1 bis 7, wobei die Inversion der Kombination von Modellen die folgenden Schritte umfasst:

- Aufbau einer Basis von P Vektoren, die repräsentativ für P bekannte oder vorbestimmte gasförmige Materialien der Probe sind, wobei jeder Vektor dieser Basis in der Form $E_i(t) = \sum_{j=1}^{N} p_{i,j} \cdot P_j(t, \theta_j) * r_j(t)$ definiert ist, wobei $P_j(t, \theta_j)$ das Wahrscheinlichkeitsgesetz des direkten Wahrscheinlichkeitsmodells der Gaschromatographiesäule (16) für die j-te Gasart ist, $r_j(t)$ das Impulsantwortmodell des Gasdetektors (18) für die j-te Gasart ist und $p_{i,j}$ die Wahrscheinlichkeit exprimiert, dass ein Molekül des i-ten gasförmigen Materials der j-ten Gasart ist,

- Aufbau eines Nachschlagewerks mit P' repräsentativen Vektorkernen, wobei P' $\geq$ P, wobei jedes gasförmige Material mit einem oder mit mehreren Vektorkernen assoziiert ist, wobei jeder Vektorkern erhalten wird:

-- entweder auf der Grundlage der Vektoren $(E_i(t))_{1 \leq i \leq P}$ durch die Modulierung des Werts von bestimmten technischen Parametern, z. B. ausgewählt aus $k_{a,j}$, $k_{d,j}$, $k_{a,j}^{NEMS}$, $k_{d,j}^{NEMS}$, $t_0$, $T_e$, ,

-- oder auf der Grundlage eines zufälligen Rauschmodells, das insbesondere eine Basislinie des elektrischen Signals beschreibt,

- Inversion der Kombination von Modellen *(P_j, r_j)* auf der Grundlage des elektrischen Signals *(g_k(t))*, um einen Proportionswert für jedes gasförmige Material der Probe (E) zu erhalten.

**12.** Verfahren zur Bestimmung einer Zusammensetzung ({C_j}, {C'_i}) einer gasförmigen Probe (E) nach einem der Ansprüche 1 bis 11, wobei der Schritt (108) des Bestimmens durch Inversion eine Bayessche Schätzfunktion implementiert.

**13.** Verfahren zur Bestimmung einer Zusammensetzung ({C_j}, {C'_i}) einer gasförmigen Probe (E) nach einem der Ansprüche 1 bis 12, wobei das elektrische Signal *(g_k(t))*, das am Ausgang des Gasdetektors (18) erhalten wird, im Voraus rauschbereinigt wird (106), bevor der Schritt des Bestimmens (108) ausgeführt wird, wobei diese Rauschbereinigung die Löschung einer Basislinie umfasst und durch einen Wavelet-Abbau des elektrischen Signals *(g_k(t))* und eine Auswahl nur eines Teils der erhaltenen Wavelet-Komponenten durchgeführt wird.

**14.** Vorrichtung zur Bestimmung einer Zusammensetzung ({C_j}, {C'_i}) einer gasförmigen Probe (E), die durch Gaschromatographie behandelt wurde, umfassend:

- eine Behandlungskette (12) der Probe (E), umfassend eine Gaschromatographiesäule (16) und einen Gasdetektor (18), der am Ausgang der Gaschromatographiesäule (16) angeordnet ist, der für die Bereitstellung eines Signals *(g_k(t))* entworfen ist, das repräsentativ für die Zusammensetzung ({C_j}, {C'_i}) der Probe (E), ist, und
- eine Vorrichtung (14) zur Behandlung des Signals, die materiell entworfen oder programmiert ist, um in Kombination mit der Behandlungskette (12) ein Verfahren zum Bestimmen der Zusammensetzung der gasförmigen Probe (E) nach einem der Ansprüche 1 bis 13 anzuwenden.

**15.** Vorrichtung zur Bestimmung einer Zusammensetzung ({C_j}) von Gasarten einer Probe (E) nach Anspruch 14, wobei der Gasdetektor (18) ein elektromagnetischer NEMS-Gasdetektor ist.

**Claims**

**1.** Method for determining a composition ({C_j}, {C'_i}) of a gas sample (E) processed by means of gas chromatography, comprising the following steps:

- running (102) the sample (E) through a processing chain (12) comprising a gas chromatography column (16) and a gas detector (18) arranged at the outlet of the gas chromatography column (16),
- obtaining (104), at the output of the gas detector (18), a representative electrical signal *(g_k(t))* of the composition ({C_j}, {C'_i}) of the sample (E),
- determining (108) the composition ({C_j}, {C'_i}) of the sample (E) using a device (22) for processing this electrical signal,

**characterized in that** the determination (108) of the composition of the sample (E) is performed on the basis of a combination stored in memory (26):

- of a direct probabilistic model $(P_j)$ of the gas chromatography column (16), this model comprising at least one law of probability defining, for at least one gas species liable to be found in the sample, a probability at each moment that a molecule of this gas species is discharged from the chromatography column, and
- an impulse response model $(r_j)$ of the gas detector (18),

and **in that** the determination step (108) is performed by inverting this combination of models $(P_j, r_j)$ using the electrical signal $(g_k(t))$, the inversion being performed by the processing device (22) having means for accessing the memory (26).

**2.** Method for determining a composition ({C_j}, {C'_i}) of a gas sample (E) according to claim 1, wherein the direct probabilistic model $(P_j)$ of the gas chromatography column (16) comprises a law of probability defined for each gas species of a reference set of predetermined gas species, this law of probability defining a probability at each moment that a molecule of the gas species in question is discharged from the chromatography column (16) and the parameters of this law being expressed on the basis of technical parameters $(k_{a,j}, k_{d,j}, t_0)$ of the chromatography column including:

- an adsorption factor $(k_{a,j})$ of the gas species in question in the chromatography column (16),

- a desorption factor ($k_{d,j}$) of the gas species in question in the chromatography column (16),
- a down-time ($t_0$) corresponding to the time taken by a carrier gas without affinity with the wall thereof to pass through this chromatography column (16).

3. Method for determining a composition ($\{C_j\}$, $\{C'_i\}$) of a gas sample (E) according to claim 2, wherein the law of probability defined for each gas species in the direct probabilistic model of the gas chromatography column (16) takes the following form:

$$P_j\big(t,\theta_j\big) = \frac{\sqrt{4 \cdot k_{a,j} \cdot k_{d,j} \cdot t_0 \cdot t}}{2 \cdot t} \cdot I_1 \cdot \left( \sqrt{4 \cdot k_{a,j} \cdot k_{d,j} \cdot t_0 \cdot t} \right) \cdot e^{-k_{a,j} \cdot t_0 - k_{d,j} \cdot t},$$

where $t$ is the time, $t \geq 0$, the index j identifies the gas species in question, $k_{a,j}$ is the adsorption factor of this gas species in the chromatography column, $k_{d,j}$ is the desorption factor of this gas species in the chromatography column, $\theta_j = (k_{a,j}, k_{d,j})$, $I_1$ is the first-order modified Bessel function of the first kind and $t_0$ is the down-time of the chromatography column.

4. Method for determining a composition ($\{C_j\}$, $\{C'_i\}$) of a gas sample (E) according to any of claims 1 to 3, wherein the impulse response model ($r_j$) of the gas detector (18) comprises a law of probability defined for each gas species of a reference set of predetermined gas species, this law of probability defining a probabilistic impulse response of the electromechanical gas detector (18) to an impulse constituted by a molecule of the gas species in question.

5. Method for determining a composition ($\{C_j\}$, $\{C'_i\}$) of a gas sample (E) according to claim 4, wherein the gas detector (18) is an electromechanical gas detector and the parameters of each law of probability of said impulse response model ($r_j$) are expressed on the basis of technical parameters $\left( k_{a,j}^{NEMS}, k_{d,j}^{NEMS}, T_e \right)$ of the electromechanical gas detector including:

- an adsorption factor $\left( k_{a,j}^{NEMS} \right)$ of the gas species in question in the electromechanical gas detector (18),
- a desorption factor $\left( k_{d,j}^{NEMS} \right)$ of the gas species in question in the electromechanical gas detector (18),
- an interaction time ($T_e$) corresponding to the presence time of a molecule in the mobile phase with regard to the electromechanical gas detector (18).

6. Method for determining a composition ($\{C_j\}$, $\{C'_i\}$) of a gas sample (E) according to claim 5, wherein the law of probability defined for each gas species in the impulse response model of the electromechanical gas detector (18) takes the following form:

$$r_j(t) = mm_j \cdot \left( 1 - e^{-k_{a,j}^{NEMS} \cdot T_e} \right) \cdot f_{heaviside}(t) \cdot e^{-k_{d,j}^{NEMS} \cdot t},$$

where $t$ is the time, the index j identifies the gas species in question, $mm_j$ is the molecular mass of this gas species, $k_{a,j}^{NEMS}$ is the adsorption factor of this gas species in the electromechanical gas detector, $k_{d,j}^{NEMS}$ is the desorption factor of this gas species in the electromechanical gas detector, $f_{heaviside}$ is the Heaviside function and $T_e$ is the integration time of the electromechanical gas detector.

7. Method for determining a composition ($\{C_j\}$, $\{C'_i\}$) of a gas sample (E) according to claims 2 and 5, wherein the combination of the models ($P_j$, $r_j$) stored in memory (26) is a linear combination of convolution products between the laws of probability of the direct probabilistic model of the gas chromatography column (16) and the laws of probability of the impulse response model of the electromechanical gas detector (18), this linear combination taking the following form:

$$g_k(t) = g_{0,k} - \alpha_k \sum_{j=1}^{N} C_j \cdot P_j\big(t,\theta_j\big) * r_j(t) + \varepsilon(t),$$

where $t$ is the time, the index k identifies a fundamental or harmonic resonance frequency mode of the electromechanical gas detector, $g_k(t)$ is an instantaneous mode k resonance frequency of the electromechanical gas detector, this instantaneous frequency forming the electrical signal obtained at the output thereof, $g_{0,k}$ is an off-load instantaneous mode k resonance frequency of the electromechanical gas detector, $\alpha_k$ is a mode k weighting constant, N is the number of gas species in the sample, the index j identifies a gas species, $C_j$ is the molecular concentration of this gas species in the sample, $P_j(t, \theta_j)$ is the law of probability of the direct probabilistic model of the gas chromatography column for this gas species, $r_j(t)$ is the law of probability of the impulse response model of the gas detector for this gas species and $\varepsilon(t)$ is a probabilistic noise model.

8.  Method for determining a composition ($\{C_j\}$) of a gas sample (E) according to any of claims 1 to 7, wherein the inversion of said combination of models includes the following steps:

    - compiling a basis of N representative vectors of N known gas species of the sample, each vector of this basis being defined in the form $P_j(t,\theta_j)$ * $r_j(t)$ where $P_j(t,\theta_j)$ is the law of probability of the direct probabilistic model of the gas chromatography column (16) for the j-th gas species and $r_j(t)$ is the impulse response model of the gas detector (18) for the j-th gas species,
    - inverting said combination of models ($P_j, r_j$) on the basis of the electrical signal ($g_k(t)$) so as to obtain a proportion value for each gas species of the sample (E).

9.  Method for determining a composition ($\{C_j\}$) of a gas sample (E) according to any of claims 1 to 7, wherein the inversion of said combination of models includes the following steps:

    - compiling a basis of N representative vectors of N known gas species of the sample, each vector of this basis being defined in the form $P_j(t,\theta_j)$ * $r_j(t)$ where $P_j(t,\theta_j)$ is the law of probability of the direct probabilistic model of the gas chromatography column (16) for the j-th gas species and $r_j(t)$ is the impulse response model of the gas detector (18) for the j-th gas species,
    - compiling a dictionary of N' representative vector kernels, where N' $\geq$ N, each gas species being associated with one or a plurality of vector kernels, each vector kernel being obtained:

      • either on the basis of the vectors ($P_j(t,\theta_j)$ * $r_j(t)_{1 \leq j \leq N}$) by modulating the value of some technical parameters, for example chosen from $k_{a,j}$, $k_{d,j}$, $k_{a,j}^{NEMS}$, $k_{d,j}^{NEMS}$, $t_0$, $T_e$,
      • or on the basis of an arbitrary noise model, notably describing a baseline of the electrical signal,

    - inverting said combination of models ($P_j, r_j$) on the basis of the electrical signal ($g_k(t)$) so as to obtain a proportion value for each gas species of the sample (E).

10.  Method for determining a composition ($\{C'_i\}$) of a gas sample (E) according to any of claims 1 to 7, wherein the inversion of said combination of models includes the following steps:

    - compiling a basis of P representative vectors of P known or predetermined gaseous substances of the sample, each vector of this basis being defined in the form $E_i(t) = \sum_{j=1}^{N} p_{i,j} \cdot P_j(t, \theta_j) * r_j(t)$ where $P_j(t,\theta_j)$ is the law of probability of the direct probabilistic model of the gas chromatography column (16) for the j-th gas species, $r_j(t)$ is the impulse response model of the gas detector (18) for the j-th gas species and $p_{i,j}$ expresses the probability that a molecule of the i-th gaseous substance is of the j-th gas species,
    - inverting said combination of models ($P_j, r_j$) on the basis of the electrical signal ($g_k(t)$) so as to obtain a proportion value for each gaseous substance of the sample (E).

11.  Method for determining a composition ($\{C'_i\}$) of a gas sample (E) according to any of claims 1 to 7, wherein the inversion of said combination of models includes the following steps:

    - compiling a basis of P representative vectors of P known or predetermined gaseous substances of the sample, each vector of this base being defined in the form $E_i(t) = \sum_{j=1}^{N} p_{i,j} \cdot P_j(t, \theta_j) * r_j(t)$ where $P_j(t,\theta_j)$ is the law of probability of the direct probabilistic model of the gas chromatography column (16) for the j-th gas species, $r_j(t)$ is the impulse response model of the gas detector (18) for the j-th gas species and $p_{i,j}$ expresses the probability that a molecule of the i-th gaseous substance is of the j-th gas species,

- compiling a dictionary of P' representative vector kernels, where P' ≥ P, each gaseous substance being associated with one or a plurality of vector kernels, each vector kernel being obtained:

• either on the basis of the vectors $(E_i(t))_{1 \leq i \leq P}$ by modulating the value of some technical parameters, for example chosen from $k_{a,j}$, $k_{d,j}$, $k_{a,j}^{NEMS}$, $k_{d,j}^{NEMS}$, $t_0$, $T_e$,

• or on the basis of an arbitrary noise model, notably describing a baseline of the electrical signal,

- inverting said combination of models $(P_j, r_j)$ on the basis of the electrical signal $(g_k(t))$ so as to obtain a proportion value for each gaseous substance of the sample (E).

12. Method for determining a composition ({C_j}, {C'_i}) of a gas sample (E) according to any of claims 1 à 11, wherein the determination step (108) by means of inversion uses a Bayesian estimator.

13. Method for determining a composition ({C_j}, {C'_i}) of a gas sample (E) according to any of claims 1 to 12, wherein the electrical signal $(g_k(t))$ obtained at the output of the gas detector (18) is previously denoised (106) before performing the determination step (108), this denoising including the removal of a baseline and being carried out by breaking the electrical signal $(g_k(t))$ into wavelets and selecting merely a portion of the wavelet components obtained.

14. Device for determining a composition ({C_j}, {C'_i}) of a gas sample (E) processed by means of gas chromatography, comprising:

- a chain (12) for processing the sample (E) comprising a gas chromatography column (16) and a gas detector (18) arranged at the outlet of the gas chromatography column (16), designed to supply a representative signal $(g_k(t))$ of the composition ({C_j}, {C'_i}) of the sample (E), and
- a signal processing device (14) designed materially or programmed to apply, in conjunction with the processing chain (12), a method for determining the composition of the gas sample (E) according to any of claims 1 to 13.

15. Device for determining a composition ({C_j}) in terms of gas species of a sample (E) according to claim 14, wherein the gas detector (18) is a NEMS electromechanical detector.

## Figure 1

## Figure 2

## Figure 3

## Figure 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2996219 A1
- WO 2011021198 A2
- US 4941101 A
- EP 2028486 A1
- EP 2509018 A1

**Littérature non-brevet citée dans la description**

- Molecular dynamic theories in chromatography. **FELINGER et al.** JOURNAL OF CHROMATOGRAPHY. ELSEVIER SCIENCE PUBLISHERS B.V, 03 Janvier 2008, vol. 1184, 20-41
- Molecular dynamic theories in chromatography. *Journal of Chromatography A,* Janvier 2008, vol. 1184, 20-41
- **V. MAZET.** Développement de méthodes de traitement de signaux spectroscopiques : estimation de la ligne de base et du spectre de raies. Henry Poincaré de Nancy, 2005